# EUROPEAN PATENT APPLICATION

(11) **EP 2 400 266 A1**
(43) Date of publication of application: **28.12.2011**
(21) Application number: 09840352.0
(22) Date of filing: 20.02.2009
(51) Int. Cl.: G01C 21/00, H04W 4/02

(54) **ROUTE GUIDANCE SYSTEM, ROUTE SEARCH SERVER, AND ROUTE GUIDANCE METHOD**

(71) Applicant: Navitime Japan Co., Ltd., Tokyo 107-0062 (JP)
(72) Inventor: UYAMA, Hiroshi, Tokyo 107-0062 (JP); IDA, Masaru, Tokyo 107-0062 (JP)
(74) Representative: Wiedemann, Peter
(86) International application number: PCT/JP2009/053051
(87) International publication number: WO 2010/095245

(57) **Abstract**

A route guidance system comprises first and second route search severs (30A, 30B), which are provided with first and second areas as service providing areas, and terminals (20). When the terminals (20) request route search, the first route search server (30A) determines the second route search sever (30B), determines whether or not the terminals (20) can perform roaming in the second area, transmits to the second route search sever (30B) point information and information as to whether or not the roaming is possible, and requests the route search. The second route search server (30B) searches for an optimal route which satisfies a route search condition. If the roaming is determined to be impossible, the second route search server (30B) determines a data format in which data can be outputted, creates guidance route information by editing the information on optimal route into the data format, and transmits the guidance route information to the terminals (20) through the first route search server (30B).

## Description

### TECHNICAL FIELD

The present invention relates to a route guidance system for searching and providing guidance for a candidate route from a desired departure place to a destination via walking, automobile, or public transportation systems; and the present invention particularly relates to a route guidance system, a route search server, and a route guidance method, whereby when a search is conducted and guidance is provided for a route that uses roads and public transportation and encompasses more than one country or geographic region, route guidance is provided for both a case in which map data of the guidance-requested country or geographic region can be acquired and a case in which it cannot be acquired.

### BACKGROUND ART

In conventional practice, there have been known navigation devices and navigation systems for searching for a route from a desired departure place to a destination and guiding a user using map data and road data. Practical applications of such navigation devices and navigation systems have included communication-type navigation systems and the like in which a portable phone or a car navigation device installed in an automobile for providing route guidance to a driver is used as a terminal for navigation, route search conditions are specified and a route search request is sent to the route search server when the device is used, a route search is performed based on the route search conditions in the route search server, the result is transmitted to the car navigation device or the portable phone, and route guidance is performed.

Particularly, communication-type navigation systems that use portable phones as terminals for navigation are sometimes used as navigation systems for pedestrians. When used as a navigation system for a pedestrian, a communication-type navigation system is preferably provided with a route guidance function that includes the use of public transportation. Therefore, there are also navigation systems which, in addition to searches and guidance of walking routes, have a function for storing transportation system lines and operating time data for railroads, aircraft, buses, and the like in a route search server, and for providing guidance of routes from desired departure places to desired destinations (ridden candidate trains and the like) in addition to searches of and guidance for walking routes. There are also transportation guidance systems which receive and display the distribution of information on lines and time schedules of transportation systems, rideable trains, and the like from an information distribution server without a search for a walking route.

A route search device and route search method used in a common navigation device and communication-type navigation system is disclosed in Patent Document 1 (Japanese Laid-open Patent Application No. 2001-165681), for example. This navigation system is configured so as to send information on the departure place and destination from a portable navigation terminal to an information distribution server, and to search for and provide guidance for a route conforming to the search conditions from data on road networks and transportation networks using the information distribution server. The means for moving from the departure place to the destination, e.g., walking, automobile, railroad, aircraft, or other public transportation, or a combination of walking and public transportation are included in the search conditions, and these means are treated as one search condition in a route search.

The information distribution server is provided with a database having roads (routes) included in the map data, wherein the nodal points and turning points thereof are recorded as nodes and the routes joining nodes together are recorded as links, and the cost information (distance and required time) of all the links is stored corresponding to the respective links. The information distribution server can provide a portable navigation terminal with guidance for the shortest possible route by referring to the database, sequentially searching for links extending from the node of the departure place and the node of the destination, and creating a guidance route from the nodes and links having the smallest possible link cost information. Either a method known as the label-correcting method or a method known as the Dijkstra method is used as the method of this manner of route search. In Patent Document 1 hereinbelow, a route search method that uses the Dijkstra method is also disclosed.

A route search system that searches for routes using a transportation system is provided with an operation time database consisting of operation time data of transportation systems incorporated into a database on the basis of a departure date and time, a departure place, a destination, an arrival time, and other route search conditions indicated by a user; and data consisting of a transportation network incorporated into a database on the basis of the operation time database. The configuration is designed so that these databases are referenced, useable transportation means (individual trains and line buses) connecting the departure place to the destination including connections (transfers) are sequentially followed as routes, and one or more candidates of guidance routes (the departure place station, the destination station, lines, trains, and other transportation means) conforming to the route search conditions are suggested. Further possible examples of the route search conditions include the required time, the number of connections, fares, and the like.

The map data and route search network data provided to a common route guidance system are data on the geographic regions (also known as service target areas) in which the system provides route guidance service. For example, with a normal route guidance system, the service target area will be within a certain country's borders, or a specific geographic region within the country's borders will be the service target area.

In this case, if the departure place and the destination are within the service target area of the route guidance system, there are no obstacles whatsoever to the route search and the route guidance. However, in cases in which the departure place is within the borders of a certain country, and the destination is within the borders of another country as well as being within the service target area of a different route guidance system, roaming is sometimes not possible in this service target area with the portable phone, navigation system, and the like. In such cases, if the map data, for example, is not acquired in advance by the portable phone, navigation system, or the like, it will not be possible to receive the route guidance after having moved to the service target area of the different route guidance system, e.g. out of the country's borders.

In view of this, the following Patent Document 2 (Japanese Laid-open Patent Application No. 2003-35544) discloses a map information distribution system in which data corresponding to an incommunicable region is downloaded in advance before the incommunicable region is reached during a route search. The server constituting this map data distribution system is provided with a map information database and an incommunicable area information database which stores communication service area information (which is actually stored as incommunicable area information representing an unserviceable communication area). A car navigation terminal has an incommunicable area information storage part which acquires and stores the aforementioned incommunicable area information, and when a route search is performed, the terminal refers to the incommunicable area information storage part, determines whether or not the incommunicable area is within the searched route, and acquires detailed map information corresponding to the incommunicable area from an information provider center. It is thereby possible to avoid the inconvenience of not being able to obtain map information in the case of an incommunicable area.

However, there are also cases in which the map needed for the route search cannot be acquired in advance because acquiring the detailed map information of an incommunicable area is restricted for national reasons. Furthermore, it is not preferable to acquire in advance the map data or route guidance information of an incommunicable area or an unroamable area, because of the extremely large amount of communicated data involved.
[Patent Document 1]: Japanese Laid-open Patent Application No. 2001-165681
[Patent Document 2]: Japanese Laid-open Patent Application No. 2003-35544

### DISCLOSURE OF THE INVENTION

### [Problems the Invention Is Intended To Solve]

In view of the problems described above, the inventors have devised the present invention by discovering that the problems described above are resolved if, when a search is made for a route from a departure place in the service target area of one system to a destination or the like located in the service target area of another system, and the terminal is not capable of roaming in the service target area of another system; a data format is determined that can be outputted from this service target area to the first service target area, and guidance route data is edited in this data format and the data is outputted to the first system.

Specifically, the present invention provides a route guidance system configured so that when a route search is performed for an area including the unroamable area and there is a restriction on providing data on the unroamable area, it is still possible for the route data of the unroamable area to be distributed in an outputtable format to the terminal.

### [Means for Resolving These Problems]

To resolve the problems described above, the route guidance system of the present invention is:
A route guidance system comprising a first route search server having a first area as a service providing area, a second route search server having a second area as a service providing area, and a terminal connected via a network at least to the first route search server in said first area; the route guidance system **characterized in that**:
   said first route search server has server determining means for determining the route search server having as a service providing area the area including a point indicated by point information serving as a route search condition received from said terminal, and roaming determining means for determining whether or not said terminal is capable of roaming in the service providing area of said determined route search server;
   said second route search server has route searching means for searching for an optimal route that satisfies said route search condition, output information determining means for determining information that can be outputted to said first route search server, and output information editing means for editing information of said searched route on the basis of said outputtable information; and
   when said terminal sends a route search request including the point information serving as a route search condition to said first route search server:
      in the case that the area including the point indicated by said point information is said second area, said first route search server determines, using said server determining means, that the route search server having the second area as the service providing area is the second route search server, determines, using said roaming determining means, whether or not the terminal is capable of roaming in said second area, transmits the point information serving as said route search condition and information as to whether or not the roaming is possible to said second route search server, and requests a route search;
      in the case that said second route search server searches, using said route searching means, for an optimal route satisfying said route search condition, and said information as to whether or not the roaming is possible indicates that the roaming is not possible, information that can be outputted to said first route search server is determined by said output information determining means, information of said optimal route is edited based on said outputtable information by said output information editing means, and guidance route information is created and provided to said first route search server; and
      said first route search server transmits said created guidance route information to said terminal.

One aspect of the route guidance system of the present invention is **characterized in that** said route search condition includes a departure place in the first area as point information, said first route search server has route searching means and candidate connection extraction means for extracting point information of at least one candidate connection whereby said second area can be reached from said first area, and said first route search server searches, using said route searching means, for an optimal route from said departure place to said candidate connection and transmits the optimal route along with optimal route information received from said second route search server to said terminal.

One aspect of the route guidance system of the present invention is **characterized in that** when said information as to whether or not the roaming is possible indicates that the roaming is not possible, said output information determining means determines whether or not map data of the unroamable area can be outputted; and said output information editing means creates guidance route information so as to include the map data when the map data can be outputted, and creates guidance route information configured from textual information when the map data cannot be outputted.

One aspect of the route guidance system of the present invention is **characterized in that** said roaming determining means determines whether or not the roaming is possible on the basis of terminal distinguishing information of said terminal and/or the network information at the time the route search condition was received from said terminal.

One aspect of the route guidance system of the present invention is **characterized in that** said first route search server has means for storing information as to whether or not the roaming is possible, the means storing information as to whether or not the roaming is possible in correspondence with each set of terminal distinguishing information, and said roaming determining means, on the basis of the terminal distinguishing information of said terminal, refers to said means for storing information as to whether or not the roaming is possible and determines whether or not the roaming is possible.

A route guidance system of the present invention is:
a route guidance system comprising a first route search server having a first area as a service providing area, a second route search server having a second area as a service providing area, a terminal connected via a network at least to the first route search server in said first area; and a route search intermediate server connected to a plurality of route search servers; the route guidance system **characterized in that**:
   said first route search server has area determining means for determining whether or not an area including a point indicated by point information serving as a route search condition received from said terminal is a service providing area;
   said route search intermediate server has server determining means for determining the route search server having as a service providing area the area including the point indicated by the point information serving as a route search condition received from said first route search server when said first route search server has received point information determined not to be in the service providing area; and roaming determining means for determining whether or not said terminal is capable of roaming in the service providing area of said determined route search server;
   said second route search server has route searching means for searching for an optimal route that satisfies said route search condition, output information determining means for determining information that can be outputted to said first route search server, and output information editing means for editing information of said searched route on the basis of said outputtable information; and
   when said terminal sends a route search request including the point information serving as a route search condition to said first route search server:
said first route search server transmits a route search request including the point information serving as said route search condition to said route search intermediate server in the case that the point indicated by said point information is determined by said area determining means to not be included in the service providing area of the first route search server;
in the case that the area including the point indicated by said point information is said second area, said route search intermediate server determines, using said server determining means, that the route search server having the second area as the service providing area is the second route search server, determines, using said roaming determining means, whether or not said terminal is capable of roaming in said second area, transmits the point information serving as said route search condition and information as to whether or not the roaming is possible to said second route search server, and requests a route search;
in the case that said second route search server searches, using said route searching means, for an optimal route satisfying said route search condition and said information as to whether or not the roaming is possible indicates that the roaming is not possible, information that can be outputted to said first route search server is determined by said output information determining means, information of said optimal route is edited by said output information editing means based on said outputtable information, and guidance route information is created and provided to said first route search server via said route search intermediate server; and
said first route search server transmits said created guidance route information to said terminal.

A route guidance system of the present invention is:
a route guidance system comprising a first route search server having a first area as a service providing area, a second route search server having a second area as a service providing area, a terminal connected via a network at least to the first route search server in said first area, and a route search intermediate server connected to a plurality of route search servers; the route guidance system **characterized in that**:
   said first route search server has area determining means for determining whether or not an area including a point indicated by point information serving as a route search condition received from said terminal is a service providing area;
   said route search intermediate server has server determining means for determining the route search server having as a service providing area the area including the point indicated by the point information serving as a route search condition received from said first route search server when said first route search server has received point information determined not to be in the service providing area, and roaming determining means for determining whether or not said terminal is capable of roaming in the service providing area of said determined route search server;
   said second route search server has route searching means for searching for an optimal route that satisfies said route search condition, output information determining means for determining information that can be outputted to said first route search server, and output information editing means for editing information of said searched route on the basis of said outputtable information; and
   when said terminal sends a route search request including the point information serving as a route search condition to said first route search server:
      said first route search server transmits the point information serving as said route search condition to said route search intermediate server in the case that the point indicated by said point information is determined by said area determining means to not be included in the service providing area of the first route search server;
      in the case that the area including the point indicated by said point information is said second area, said route search intermediate server determines, using said server determining means, that the route search server having the second area as the service providing area is the second route search server, determines, using said roaming determining means, whether or not said terminal is capable of roaming in said second area, and transmits said determined second route search server information and information as to whether or not the roaming is possible to said first route search server;
      said first route search server transmits the point information serving as said route search conditions and said information as to whether or not the roaming is possible to said second route search server and requests a route search;
      in the case that said second route search server searches, using said route searching means, for an optimal route satisfying said route search condition and said information as to whether or not the roaming is possible indicates that the roaming is not possible, information that can be outputted to said first route search server is determined by said output information determining means, information of said optimal route is edited by said output information editing means based on said outputtable information, and guidance route information is created and provided to said first route search server; and
      said first route search server transmits said created guidance route information to said terminal.

One aspect of the route guidance system of the present invention is **characterized in that** said route search condition includes a departure place in the first area as point information, said first route search server has route searching means, and said route search intermediate server has candidate connection extraction means for extracting point information of at least one candidate connection whereby said second area can be reached from said first area;
when said route search intermediate server receives a route search request including the departure place in said first area as point information from said first route search server, point information of at least one candidate connection whereby said second area can be reached by said first area is extracted by said candidate connection extraction means and transmitted to said first route search server; and
said first route search server searches for an optimal route from said departure place to said candidate connection using said route searching means and transmits the optimal route along with optimal route information received from said second route search server to said terminal.

One aspect of the route guidance system of the present invention is **characterized in that** when said information as to whether or not the roaming is possible indicates that the roaming is not possible, said output information determining means determines whether or not map data of the unroamable area can be outputted, and said output information editing means creates guidance route information so as to include the map data when the map data can be outputted and creates guidance route information configured from textual information when the map data cannot be outputted.

One aspect of the route guidance system of the present invention is **characterized in that** said roaming determining means determines whether or not the roaming is possible on the basis of terminal distinguishing information of said terminal and/or the network information at the time the route search condition was received from said terminal via said first route search server.

One aspect of the route guidance system of the present invention is **characterized in that** said route search intermediate server has means for storing information as to whether or not the roaming is possible, the means storing information as to whether or not the roaming is possible in correspondence with each set of terminal distinguishing information, said first route search server transmits the terminal distinguishing information along with the route search condition to said route search intermediate server, and said roaming determining means refers to said means for storing information as to whether or not the roaming is possible on the basis of the terminal distinguishing information of said terminal received from said first route search server and determines whether or not the roaming is possible.

The invention related to the route search server according to the present invention is:
a route search server constituting a first route search server in a route guidance system, the route guidance system having said first route search server having a first area as a service providing area, a second route search server having a second area as a service providing area, and a terminal connected via a network at least to the first route search server in said first area; the route search server characterized in comprising:
   server determining means for determining the route search server having as a service providing area the area including a point indicated by point information serving as a route search condition received from said terminal, and roaming determining means for determining whether or not said terminal is capable of roaming in the service providing area of said determined route search server; wherein
   when a route search request including point information serving as a route search condition is received from said terminal, in the case that the area including the point indicated by said point information is said second area, the route search server having the second area as a service providing area is determined by said server determining means to be said second route search server, whether or not said terminal is capable of roaming in said second area is determined by said roaming determining means, the point information serving as said route search condition and information as to whether or not the roaming is possible are transmitted to said second route search server, a route search is requested, and when guidance route information is received from said second route search server, said guidance route information is transmitted to said terminal.

The invention related to the route search server according to the present invention is:
a route search server constituting a second route search server in a route guidance system having a first route search server having a first area as a service providing area, said second route search server having a second area as a service providing area, and a terminal connected via a network at least to the first route search server in said first area; the route search server characterized in comprising:
   route searching means for searching for an optimal route that satisfies a route search condition, output information determining means for determining information that can be outputted to said first route search server, and output information editing means for editing information of said searched route on the basis of said outputtable information; wherein
   when a route search request including point information serving as a route search condition and information as to whether or not the roaming is possible is received from said first route search server, an optimal route that satisfies said route search condition is searched by said route searching means, and in the case that said information as to whether or not the roaming is possible indicates that the roaming is not possible, information that can be outputted to said first route search server is determined by said output information determining means, said optimal route information is edited by said output information editing means on the basis of said outputtable information, and guidance route information is created and supplied to said first route search server.

The invention related to the route search server according to the present invention is:
a route search server constituting a plurality of route search servers in a route guidance system having said plurality of route search servers having different areas as service providing areas, and a terminal connected via a network to at least one route search server of said plurality of route search servers; the route search server **characterized in that**:
   said route search server comprises server determining means for determining the route search server having as a service providing area the area including a point indicated by point information serving as a route search condition received from said terminal, roaming determining means for determining whether or not said terminal is capable of roaming in the service providing area of said determined route search server, route searching means for searching for an optimal route that satisfies said route search condition, output information determining means for determining information that can be outputted to the different route search servers, and output information editing means for editing information of said searched route on the basis of said outputtable information;
   when a route search request including point information serving as a route search condition is received from said terminal, the route search server having as a service providing area the area including the point indicated by said point information is determined by said server determining means, whether or not said terminal is capable of roaming in the area is determined by said roaming determining means, the point information serving as said route search condition and information as to whether or not the roaming is possible are transmitted to said determined route search server, a route search is requested, and in the case that guidance route information is received from the route search server that was requested to make said route search, said guidance route information is transmitted to said terminal; and
   when a route search request including point information serving as a route search condition and information as to whether or not the roaming is possible are received from another route search server, an optimal route that satisfies said route search conditions is searched by said route searching means, and in the case that said information as to whether or not the roaming is possible indicates that the roaming is not possible, information that can be outputted to said other route search server is determined by said output information determining means, said optimal route information is edited by said output information editing means on the basis of said outputtable information, and guidance route information is created and supplied to said other route search server.

One aspect of the route search server of the present invention is **characterized in that** when said information as to whether or not the roaming is possible indicates that the roaming is not possible, said output information determining means determines whether or not map data of the unroamable area can be outputted, and said output information editing means creates guidance route information so as to include the map data when the map data can be outputted and creates guidance route information configured from textual information when the map data cannot be outputted.

One aspect of the route search server of the present invention is **characterized in that** said roaming determining means determines whether or not the roaming is possible on the basis of terminal distinguishing information of said terminal and/or the network information at the time the route search conditions were received from said terminal.

One aspect of the route search server of the present invention is **characterized in that** said route search server has means for storing information as to whether or not the roaming is possible, the means storing information as to whether or not the roaming is possible in correspondence with each set of terminal distinguishing information, and said roaming determining means refers to said means for storing information as to whether or not the roaming is possible on the basis of the terminal distinguishing information of said terminal and determines whether or not the roaming is possible.

A route search server of the present invention is:
a route search server constituting a first route search server in a route guidance system, the route guidance system having said first route search server having a first area as a service providing area, a second route search server having a second area as a service providing area, a terminal connected via a network at least to the first route search server in said first area, and a route search intermediate server connected to a plurality of route search servers; the route search server characterized in comprising:
   area determining means for determining whether or not an area including a point indicated by point information serving as a route search condition received from said terminal is a service providing area; wherein
   when a route search request including point information serving as a route search condition is received from said terminal, in the case that the point indicated by said point information is determined to not be included in the service providing area by said area determining means, a route search request including the point information serving as a route search condition received from said terminal is transmitted to said route search intermediate server, a route search is requested, and when guidance route information is received from said route search intermediate server, said guidance route information is transmitted to said terminal.

A route search server of the present invention is:
a route search server constituting a first route search server in a route guidance system, the route guidance system having said first route search server having a first area as a service providing area, a second route search server having a second area as a service providing area, a terminal connected via a network at least to the first route search server in said first area, and a route search intermediate server connected to a plurality of route search servers; the route search server characterized in comprising:
   area determining means for determining whether or not an area including a point indicated by point information serving as a route search condition received from said terminal is a service providing area; wherein
   when a route search request including point information serving as a route search condition is received from said terminal, in the case that the point indicated by said point information is determined by said area determining means to not be included in the service providing area, the point information serving as the route search condition received from said terminal is transmitted to said route search intermediate server; when information of the route search server having as a service providing area the area including the point indicated by said point information and information as to whether or not the roaming is possible are received from said route search intermediate server, the point information serving as said route search condition and said information as to whether or not the roaming is possible are transmitted to the route search server having as a service providing area the area including the point indicated by said point information, a route search is requested, and when guidance route information is received from the route search server, said guidance route information is transmitted to said terminal.

A route search server of the present invention is:
a route search server constituting a second route search server in a route guidance system, the route guidance system having a first route search server having a first area as a service providing area, said second route search server having a second area as a service providing area, a terminal connected via a network at least to the first route search server in said first area, and a route search intermediate server connected to a plurality of route search servers; the route search server characterized in comprising:
   route searching means for searching for an optimal route that satisfies said route search condition, output information determining means for determining information that can be outputted to said first route search server, and output information editing means for editing information of said searched route on the basis of said outputtable information;
   when a route search request including point information serving as a route search condition and information as to whether or not the roaming is possible is received from said first route search server or said route search intermediate server, an optimal route that satisfies said route search conditions is searched by said route searching means, and in the case that said information as to whether or not the roaming is possible indicates that the roaming is not possible, information that can be outputted to said first route search server is determined by said output information determining means, said optimal route information is edited by said output information editing means on the basis of said outputtable information, and guidance route information is created and supplied to said first route search server or said route search intermediate server that received said route search request.

A route search server of the present invention is:
a route search server constituting a plurality of route search servers in a route guidance system, the route guidance system having said plurality of route search servers having service providing areas that are different areas, a terminal connected via a network to at least one route search server of said plurality of route search servers, and a route search intermediate server connected to said plurality of route search servers; the route search server characterized in comprising:
   area determining means for determining whether or not an area including a point indicated by point information serving as a route search condition received from said terminal is a service providing area, route searching means for searching for an optimal route that satisfies said route search condition, output information determining means for determining information that can be outputted to the different route search servers, and output information editing means for editing information of said searched route on the basis of said outputtable information; wherein
   when a route search request including point information serving as a route search condition has been received from said terminal, a determination is made by said area determining means as to whether or not the area including the point indicated by the point information as the route search condition received from said terminal is the service providing area, and in the case that the point indicated by said point information is not included in the service providing area, a route search request including the point information serving as said route search condition is transmitted to said route search intermediate server and a route search is requested;
   when guidance route information has been received from said route search intermediate server, said route guidance information is transmitted to said terminal; and
   when a route search request including point information serving as a route search condition and information as to whether or not the roaming is possible is received from said route search intermediate server, an optimal route that satisfies said route search conditions is searched by said route searching means, and in the case that said information as to whether or not the roaming is possible indicates that the roaming is not possible, information that can be outputted to said other route search server is determined by said output information determining means, information of said optimal route is edited by said output information editing means on the basis of said outputtable information, and guidance route information is created and provided to said route search intermediate server.

A route search server of the present invention is:
a route search server constituting a plurality of route search servers in a route guidance system, the route guidance system having said plurality of route search servers having service providing areas that are different areas, a terminal connected via a network to at least one route search server of said plurality of route search servers, and a route search intermediate server connected to said plurality of route search servers; the route search server characterized in comprising:
   area determining means for determining whether or not an area including a point indicated by point information serving as a route search condition received from said terminal is a service providing area, route searching means for searching for an optimal route that satisfies said route search condition, output information determining means for determining information that can be outputted to the different route search servers, and output information editing means for editing information of said searched route on the basis of said outputtable information; wherein
   when a route search request including point information serving as a route search condition has been received from said terminal, a determination is made by said area determining means as to whether or not the area including the point indicated by the point information as the route search condition received from said terminal is the service providing area, and in the case that the point indicated by said point information is determined to not be included in the service providing area, the point information serving as said route search condition is transmitted to said route search intermediate server and a request is made to determine the route search server and to determine whether or not roaming is possible;
   when information as to whether or not the roaming is possible and information of the route search server having as a service providing area the area including the point indicated by said point information have been received from said route search intermediate server, the point information serving as said route search condition and said information as to whether or not the roaming is possible are transmitted to the route search server having as a service providing area the area including the point indicated by said point information and a route search is requested;
   when route guidance information has been received from the route search server that requested said route search, said guidance route information is transmitted to said terminal; and
   when a route search request including the point information serving as the route search condition and the information as to whether or not the roaming is possible has been received from another route search server, an optimal route that satisfies said route search condition is searched by said route searching means, and in the case that said information as to whether or not the roaming is possible indicates that the roaming is not possible, information that can be outputted to said other route search server is determined by said output information determining means, information of said optimal route is edited by said output information editing means on the basis of said outputtable information, and route guidance information is created and provided to said other route search server.

One aspect of the route search server of the present invention is **characterized in that** in the case that said information as to whether or not the roaming is possible indicates that the roaming is not possible, said output information determining means determines whether or not map data of the unroamable area can be outputted, and said output information editing means creates guidance route information so as to include the map data when the map data can be outputted and creates guidance route information configured from textual information when the map data cannot be outputted.

A route search intermediate server of the present invention is:
a route search intermediate server in a route guidance system having a first route search server having a first area as a service providing area, a second route search server having a second area as a service providing area, a terminal connected via a network at least to the first route search server in said first area, and said route search intermediate server connected to a plurality of route search servers; the route search intermediate server characterized in comprising:
   server determining means for determining the route search server having as a service providing area an area including a point indicated by point information serving as a route search condition received from said first route search server when said first route search server receives point information determined to not be in the service providing area, and roaming determining means for determining whether or not said terminal is capable of roaming in the service providing area of said determined route search server; wherein
   when a route search request including point information serving as a route search condition is received from said first route search server, in the case that the area including the point indicated by said point information is said second area, the route search server having the second area as a service providing area is determined by said server determining means to be said second route search server, whether or not said terminal is capable of roaming in said second area is determined by said roaming determining means, the point information serving as said route search condition and information as to whether or not the roaming is possible are transmitted to said second route search server, and a route search is requested; and
   when guidance route information is received from said second route search server, said guidance route information is transmitted to said first route search server.

A route search intermediate server of the present invention is:
a route search intermediate server in a route guidance system having a first route search server having a first area as a service providing area, a second route search server having a second area as a service providing area, a terminal connected via a network at least to the first route search server in said first area, and said route search intermediate server connected to a plurality of route search servers; the route search intermediate server characterized in comprising:
   server determining means for determining the route search server having as a service providing area an area including a point indicated by point information serving as a route search condition received from said first route search server when said first route search server receives point information determined to not be in the service providing area, and roaming determining means for determining whether or not said terminal is capable of roaming in the service providing area of said determined route search server; wherein
   when point information serving as a route search condition is received from said first route search server, in the case that the area including the point indicated by said point information is said second area, the route search server having the second area as a service providing area is determined by said server determining means to be said second route search server, whether or not said terminal is capable of roaming in said second area is determined by said roaming determining means, and said determined information of the second route search server and information as to whether or not the roaming is possible are transmitted to said first route search server.

One aspect of the route search intermediate server of the present invention is **characterized in that** said roaming determining means determines whether or not the roaming is possible on the basis of terminal distinguishing information of said terminal and/or the network information at the time the route search condition was received from said terminal via said first route search server.

One aspect of the route search intermediate server of the present invention is **characterized in that** said route search intermediate server has means for storing information as to whether or not the roaming is possible, the means storing information as to whether or not the roaming is possible in correspondence with each set of terminal distinguishing information, said first route search server transmits the terminal distinguishing information along with the route search condition to said route search intermediate server, and said roaming determining means refers, on the basis of the terminal distinguishing information of said terminal received from said first route search server, to said means for storing information as to whether or not the roaming is possible and determines whether or not the roaming is possible.

The invention related to the route guidance method according to the present invention is:
a route guidance method in a route guidance system having a first route search server having a first area as a service providing area, a second route search server having a second area as a service providing area, and a terminal connected via a network at least to the first route search server in said first area; the route guidance method **characterized in that**:
   when said terminal sends to said first route search server a route search request including point information serving as a route search condition, in said first route search server, in the case that an area including a point indicated by said point information is said second area, the route search server whose service providing area is the second area is determined to be the second route search server, a determination is made as to whether or not said terminal is capable of roaming in said second area, the point information serving as said route search condition and information as to whether or not the roaming is possible are transmitted to said second route search server, and a route search is requested;
   in said second route search server, an optimal route that satisfies said route search condition is searched, and in the case that the information as to whether or not the roaming is possible indicates that the roaming is not possible, information that can be outputted to said first route search server is determined, information of said optimal route is edited based on said outputtable information, and guidance route information is created and provided to said first route search server; and
   in said first route search server, said created guidance route information is transmitted to said terminal.

One aspect of the route guidance method of the present invention is **characterized in that** said route search condition includes a departure place in the first area as point information, and an optimal route from said departure place to candidate connection is searched in said first route search server and transmitted to said terminal along with optimal route information received from said second route search server.

One aspect of the route guidance method of the present invention is **characterized in that** in the case that said information as to whether or not the roaming is possible indicates that the roaming is not possible, a determination is made as to whether or not it is possible to output map data of the unroamable area, guidance route information is created so as to include the map data when the map data can be outputted, and guidance route information configured from textual information is created when the map data cannot be outputted.

One aspect of the route guidance method of the present invention is **characterized in that** a determination of whether or not roaming is possible is made based on terminal distinguishing information of said terminal and/or network information at the time a route search condition was received from said terminal.

One aspect of the route guidance method of the present invention is **characterized in that** in said first route search server, information of whether or not the roaming is possible is stored in correspondence with each set of terminal distinguishing information, said stored information as to whether or not the roaming is possible is referred to based on the terminal distinguishing information of said terminal and a determination is made as to whether or not the roaming is possible.

A route guidance method of the present invention is:
a route guidance method in a route guidance system having a first route search server having a first area as a service providing area, a second route search server having a second area as a service providing area, a terminal connected via a network at least to the first route search server in said first area, and a route search intermediate server connected to a plurality of route search servers; the route guidance method **characterized in that**:
   when said terminal sends to said first route search server a route search request including point information serving as a route search condition, in said first route search server, in the case that the point indicated by said point information is determined to not be included in the service providing area of said first route search server, a route search request including the point information serving as said route search condition is transmitted to said route search intermediate server;
   in said route search intermediate server, in the case that the area including the point indicated by said point information is said second area, the route search server whose service providing area is the second area is determined to be the second route search server, a determination is made as to whether or not said terminal is capable of roaming in said second area, the point information serving as said route search condition and information as to whether or not the roaming is possible are transmitted to said second route search server, and a route search is requested;
   in said second route search server, an optimal route that satisfies said route search condition is searched, and in the case that the information as to whether or not the roaming is possible indicates that the roaming is not possible, information that can be outputted to said first route search server is determined, information of said optimal route is edited based on said outputtable information, and guidance route information is created and provided to said first route search server via said route search intermediate server; and
   in said first route search server, said created guidance route information is transmitted to said terminal.

A route guidance method of the present invention is:
a route guidance method in a route guidance system having a first route search server having a first area as a service providing area, a second route search server having a second area as a service providing area, a terminal connected via a network at least to the first route search server in said first area, and a route search intermediate server connected to a plurality of route search servers; the route guidance method **characterized in that**:
   when said terminal sends to said first route search server a route search request including point information serving as a route search condition, in said first route search server, in the case that the point indicated by said point information is determined to not be included in the service providing area of said first route search server, the point information serving as said route search condition is transmitted to said route search intermediate server;
   in said route search intermediate server, in the case that the area including the point indicated by said point information is said second area, the route search server whose service providing area is the second area is determined to be the second route search server, a determination is made as to whether or not said terminal is capable of roaming in said second area, and said determined information of the second route search server and information as to whether or not the roaming is possible are transmitted to said first route search server;
   in said first route search server, the point information serving as said route search condition and said information as to whether or not the roaming is possible are transmitted to said second route search server and a route search is requested;
   in said second route search server, an optimal route that satisfies said route search condition is searched, and in the case that said information as to whether or not the roaming is possible indicates that the roaming is not possible, information that can be outputted to said first route search server is determined, information of said optimal route is edited based on said outputtable information, and guidance route information is created and provided to said first route search server; and
   in said first route search server, said created guidance route information is transmitted to said terminal.

One aspect of the route guidance method of the present invention is **characterized in that** said route search condition includes a departure place in the first area as point information, and in said route search intermediate server, and when a route search request including the departure place in said first area as point information is received from said first route search server, point information of at least one candidate connection whereby said second area can be reached by said first area is extracted and transmitted to said first route search server; and in said first route search server, an optimal route from said departure place to said candidate connection is searched and transmitted to said terminal along with the optimal route information received from said second route search server.

One aspect of the route guidance method of the present invention is **characterized in that** in the case that said information as to whether or not the roaming is possible indicates that the roaming is not possible, a determination is made as to whether or not map data of the unroamable area can be outputted, guidance route information is created so as to include the map data when the map data can be outputted, and guidance route information configured from textual information is created when the map data cannot be outputted.

One aspect of the route guidance method of the present invention is **characterized in that** a determination of whether or not roaming is possible is made based on terminal distinguishing information of said terminal and/or network information at the time a route search condition was received from said terminal via said first route search server.

One aspect of the route guidance method of the present invention is **characterized in that** in said route search intermediate server, information of whether or not the roaming is possible is stored in correspondence with each set of terminal distinguishing information, in said first route search server, the terminal distinguishing information is transmitted to said route search intermediate server along with the route search condition, and in said route search intermediate server, said stored information as to whether or not the roaming is possible is referred to based on the terminal distinguishing information of said terminal and a determination is made as to whether or not the roaming is possible.

### [Effect of the Invention]

According to the route guidance system of the present invention, when a request is sent from the terminal to the first route search server of the first area to search for a route to reach the unroamable second area, the second route search server searches for an optimal route and determines outputtable information (e.g., whether or not map data can be outputted), the output information editing means edits information of the optimal route to a predetermined data format, for example, on the basis of the outputtable information and transmits the edited information to the first route search server, and the optimal route information can be distributed in an outputtable data format from the first route search server to the terminal. Even when a search is performed in an area which has data whose output is restricted, it is thereby possible to receive route guidance in a data format that has been edited in compliance with the restriction.

According to one aspect of the route guidance system of the present invention, a route search can be performed for a route that encompasses more than one area, such as a route that leads from the first area into the second area. In this case, connections in the borders of the areas are extracted, routes that pass through these connections are designated as candidate routes, and an optimal route can be determined from among these candidate routes. Even when the second area has data whose output is restricted, the data in the second area can be edited to an outputtable data format in compliance with the restriction and distributed to the terminal via the first route search server.

According to one aspect of the route guidance system of the present invention, in cases in which the output of map data from the second area to another area is restricted, map data can be edited to text data or other textual information in compliance with the restriction and distributed to the terminal via the first route search server. Thereby, although the user cannot receive route guidance by map data as route guidance in the second area, the user can instead receive route guidance by text data. Additionally, the amount of data during communication can be reduced because route guidance information configured from text data instead of map data is transmitted either from the second route search server to the first route search server or from the first search server to the terminal.

According to one aspect of the route guidance system of the present invention, whether or not roaming is possible is determined based on the terminal distinguishing information and/or the network information at the time the route search condition was received from the terminal. It is thereby possible to determine a roaming-capable terminal that has been registered or permitted in advance, and to determine a terminal that satisfies the conditions of the network set in advance. When moving through an area with a roaming-capable terminal, it is possible to perform route guidance from the second route search server, and with a terminal not capable of roaming, route guidance of the second area can be acquired in advance via the first route search server.

According to one aspect of the route guidance system of the present invention, whether or not the roaming is possible is stored for each set of terminal distinguishing information in the means for storing information as to whether or not the roaming is possible. It is thereby possible to easily determine whether or not the roaming is possible if the terminal distinguishing information is transmitted from the terminal to the first route search server.

According to the route guidance system of the present invention, the route guidance system is configured comprising a first route search server, a second route search server, a terminal, and a route search intermediate server. When the destination indicated as a route search condition is outside of the service providing area of the first route search server, the route search server whose service providing area includes the destination can be specified and a request for a route search outside of the service providing area of the first route search server can be made by the route search intermediate server. Therefore, even in cases such as when the route search server whose service providing area includes the destination included in the route search condition cannot be specified by the first route search server, the appropriate route search server can be specified and a route search can be performed via the route search intermediate server. It is also possible to determine information (e.g., whether or not map data can be outputted) that can be outputted from the route search server (the second route search server, in other words) whose service providing area includes the destination, the output information editing means can edit the optimal route information to a predetermined data format, for example, on the basis of the outputtable information and transmit the edited information to the first route search server, and the optimal route information can be distributed in an outputtable data format from the first route search server to the terminal.

According to the route guidance system of the present invention, in cases in which the destination indicated as the route search condition is outside of the service providing area of the first route search server, the route search server whose service providing area includes the destination can be specified, and the first route search server can request a route search outside of its service providing area to the appropriate route search server. Therefore, a route search can be performed even in cases such as when the route search server whose service providing area includes the destination included in the route search condition cannot be specified by the first route search server. It is also possible to determine information (e.g., whether or not map data can be outputted) that can be outputted from the route search server (the second route search server, in other words) whose service providing area includes the destination, the output information editing means can edit the optimal route information to a predetermined data format, for example, on the basis of the outputtable information and transmit the edited information to the first route search server, and the optimal route information can be distributed in an outputtable data format from the first route search server to the terminal.

For the route search server and route search intermediate server of the present invention, a route search server and route search intermediate server can be provided which are capable of exhibiting the effects of the above-described invention of a route guidance system. The route guidance method of the present invention is also capable of exhibiting the effects of the above-described invention of a route guidance system.

### BRIEF DESCRIPTION OF THE DRAWINGS

FIG. 1 is a system configuration diagram showing the configuration of a route guidance system according to the present invention.
FIG. 2 is a system configuration diagram for describing a summary of route searching and route guidance of the present invention.
FIG. 3 is a block diagram showing the detailed configuration of the route search servers and the terminal.
FIG. 4 is a schematic diagram for describing the road network data used in a route search of the present invention.
FIG. 5 is a schematic diagram for describing the transportation network data used in a route search of the present invention.
FIG. 6 is a flowchart showing the operation sequence of the first route search server 30A of one area A shown in FIG. 2.
FIG. 7 is a flowchart showing the operation sequence of the second route search server 30B of another area B shown in FIG. 2.
FIG. 8 includes diagrams of the results of a route search, showing screens of route search results received by the terminal, wherein FIG. 8A shows a display screen of route search results in a case in which map data can be outputted from area B shown in FIG. 2 to area A, and FIG. 8B shows a display screen of route search results in a case in which map data cannot be outputted from area B shown in FIG. 2 to another area.
FIG. 9 is a block configuration diagram showing the detailed configuration of a route guidance system according to an example of the present invention.

### [Description of Symbols]

- 10: Route guidance system
- 20: Terminal
- 30A, 30B: Route search server
- 32: Map database
- 33: Network database for route search
- 34: POI information database
- 301: Control means
- 302: Communication means
- 303: Processing request storage means
- 304: Area determining means
- 305: Server determining means
- 306: Candidate connection extracting means
- 307: Route searching means
- 308: Means for storing information as to whether or not the roaming is possible
- 309: Roaming determining means
- 310: Output information determining means
- 311: Output information editing means
- 312: Candidate route combining means
- 313: Recommended route determining means
- 314: Candidate route storage means
- 315: Distribution data editing means

### BEST MODE FOR CARRYING OUT THE INVENTION

The present invention is described in detail hereinbelow using specific examples and drawings. The examples hereinbelow are intended to present examples of a route guidance system for specifying the technological concepts of the present invention and are not intended to limit the present invention to this route guidance system. The examples are equally applicable to other embodiments of a route guidance system included within the scope of the claims.

### [Example 1]

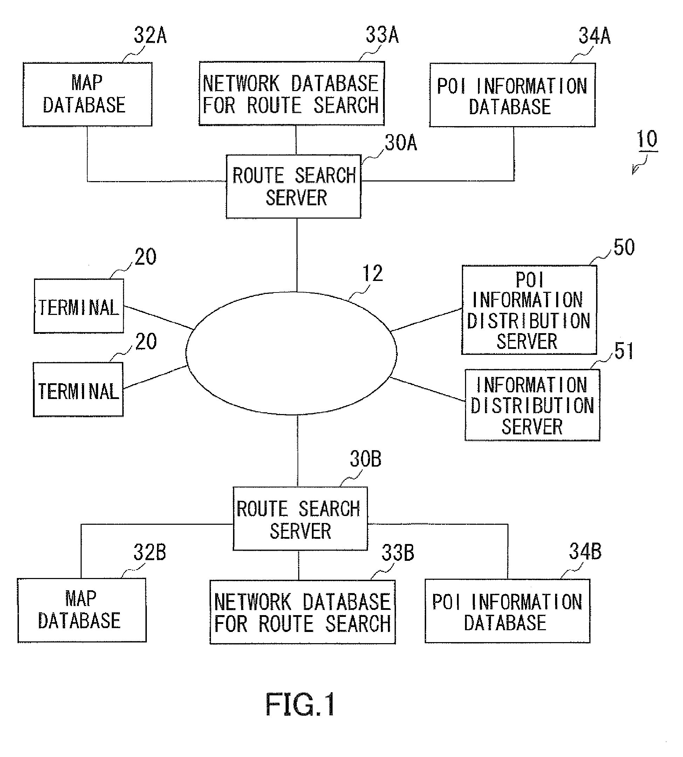

FIG. 1 is a system configuration diagram showing the configuration of a route guidance system 10 according to the present invention. The route guidance system 10 shown in FIG. 1 comprises terminals 20, a first route search server 30A, and a second route search server 30B which are connected via a network 12. The first and second route search servers 30A, 30B of the route guidance system 10 each use specified countries and geographic regions as areas in which the route search and route guidance service is provided, and the route search servers 30A, 30B each have only route search network data or map data covering the specified service providing areas.

The route guidance system 10 comprises a POI information distribution server 50 for providing the location, service specifics, and other detailed information of POIs (points of interest) belonging to various categories, various other information distribution servers 51 for providing contents such as music and various images as well as other information, and the like. The first and second route search servers 30A can acquire needed data from the POI information distribution server 50 and the other information distribution servers 51 via the network 12 and can add the data to its own database. The first and second route search servers 30A, 30B can also similarly transmit a retrieval request to the POI information distribution server 50 or the other information distribution servers 51 and acquire the desired retrieval results.

The route guidance system 10 according to the present invention is not limited to the configuration described above; the first and second route search servers 30A, 30B may have a navigation service function as well as a map distribution server function for distributing maps of specific POI locations. A cellular telephone can be used as a terminal 20, and other options include a PDA, a music player, a portable game device, and other portable devices; and a mobile personal computer (PC).

The first and second route search servers 30A, 30B shown in FIG. 1 comprise map databases 32A, 32B and network databases 33A, 33B for route search, and when a route search request comes from a terminal 20, the route search servers refer to the network databases 33A, 33B for route search and conduct a route search. The servers also transmits to the terminals 20 the guidance route data of an optimal route or a candidate route obtained from the route search results. When a request comes from a terminal 20 to retrieve a desired point or POI and acquire its map data, relevant map data is retrieved with reference to the map databases 32A, 32B, and the data is distributed to the terminal 20.

The network databases 33A, 338 for route search comprise road network data for searching for routes by walking or automobile, and a transportation network data for searching for routes for traveling by railroad, aircraft, boat, bus, or other transportation systems. The road network data designates the intersection points and nodal points of the roads as nodes and expresses the connections between nodes as links, and the times required when traveling at standard speeds are associated with the links as link costs.

The transportation network data designates line stations, airports, and harbors of transportation systems as nodes and expresses the connections between nodes as links, wherein the various transportation means including individual trains, aircraft, boats, buses, and the like constitute links, and the data is configured from data to which node departure times and node arrival times have been assigned based on operation time schedules.

In the terminals 20, route search conditions are designated which specify departure places, destinations, movement means (walking, automobile, transportation systems, and the like), departure times, and other time conditions, and when a route search request comes to the first and second route search servers 30A, 30B, the first and second route search servers 30A, 30B refer to the network data of the network databases 33A, 33B for route search and searches for an optimal route or a plurality of candidate routes conforming to the route search conditions from the departure place to the destination, and then responds to the terminals 20 with information on the routes. When a route is selected and a route guidance request is issued in a terminal 20, map data, data on the selected route, and guidance data for providing guidance through the route are transmitted to the terminal 20.

In the present invention, different route search servers that use different areas as service target areas are linked to each other, and when the departure place and destination are in areas where service is provided by different route search servers, a search can be made and guidance provided for the optimal route from the departure place to the destination as a recommended route.

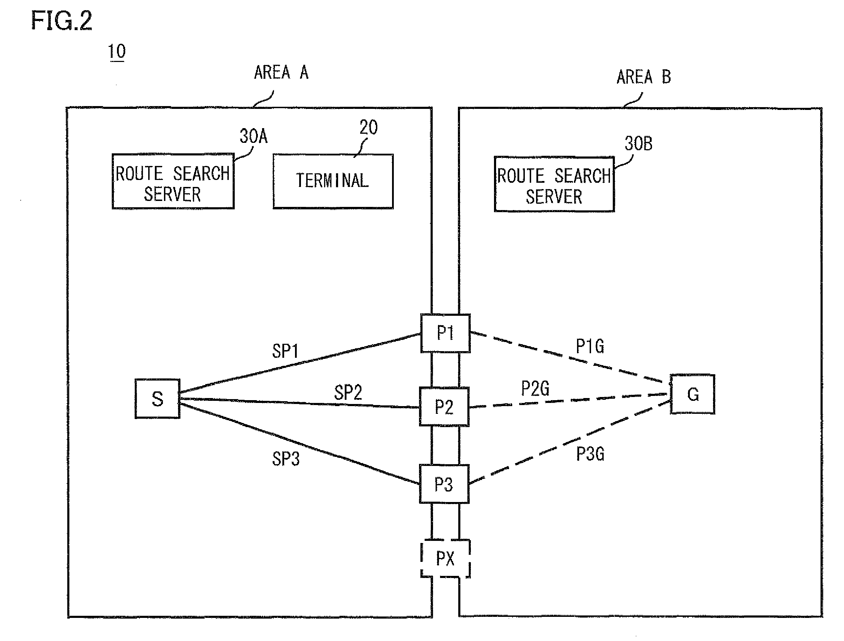

FIG. 2 is a system configuration diagram for describing a summary of route searching and route guidance of the present invention using this manner of route guidance server linking. In FIG. 2, area A is the service providing area of the first route search server 30A, and area B is the service providing area of the second route search server 30B.

The area A of the route search server 30A has only map data and route search network data covering area A, and the area B route search server 30B has only map data and route search network data covering area B. Therefore, the first route search server 30A cannot search for routes in which the departure place or destination is a point within area B, and the second route search server 30B cannot search for routes in which the departure place or destination is a point within area A.

In the present invention, when a terminal 20 at a position in area A sends to the first route search server 30A a route search request encompassing an area in which the departure place S is a point within area A and the destination G is a point within area B, the first route search server 30A and the second route search server 30B are linked in the following manner, and an optimal route from the departure place S to the destination G is determined as a recommended route and provided as guidance to the terminal 20.

Specifically, when the destination G is a point outside of area A and inside area B, the first route search server 30A retrieves links of movement means that join area A and area B, extracts one or more candidate connections P1 to P3, searches for the optimal routes (the routes whereby the total link costs of the routes will be minimal) from the departure place S to each of the candidate connections P1, P2, P3, designates these as candidate routes SP1, SP2, SP3, and determines their total link costs (required times).

The first route search server 30A sends point information on the destination G, point information on the candidate points P1 to P3, and the required times for the candidate routes to the second route search server 30B, whose provided service area is area B where the destination G is located. The second route search server 30B searches for the optimal routes (the routes whereby the total link costs of the routes will be minimal) from the candidate connections P1 to P3 to the destination G and searches for the candidate routes P1G, P2G, P3G on the basis of the point information of the candidate connections P1 to P3 and the point information of the destination G.

The second route search server 30B combines (adds) the total link costs (required times) of the candidate routes SP1, SP2, SP3 searched by the first route search server 30A with the total link costs (required times) of the candidate routes P1G, P2G, P3G within the candidate points P1 to P3, and determines that the recommended route is the optimal route whose total link cost (total required time) from the departure place S to the destination G is the lowest. Hereinbelow as an example is a description of a case of a minimal total link cost (total required time) of the candidate route SP2 and the candidate route P2G joined by the candidate connection P2.

The first route search server 30A, whose service providing area is area A, determines whether or not the terminal 20 is capable of roaming within area B and transmits information as to whether or not the roaming is possible to the second route search server 30B when requesting a route search of the second route search server 30B. When the optimal route P2G is determined as described above, the second route search server 30B of area B determines a data editing process of the next optimal route P2G on the basis of the information as to whether or not the roaming is possible received from the first route search server 30A.

Specifically, when the terminal 20 is capable of roaming in area B, the second route search server 30B transmits to the first route search server 30A the link cost information of the optimal route P2G from the candidate connection P2 to the destination G and the link information for accessing this route information. When the terminal 20 has moved into area B, detailed route guidance can be received, and therefore if the link information is transmitted in advance to the first route search server 30A, route guidance information and map data is transmitted from the second route search server 30B to the first route search server 30A only when there is a request from the user, and unnecessary data transmission can be prevented.

When the terminal 20 is not capable of roaming in area B, the second route search server 30B determines whether or not map data of area B can be outputted to the first route search server 30A of area A. In cases in which map data can be outputted, the second route search server 30B transmits to the first route search server 30A the map data and route guidance information from the candidate connection P2 to the destination G. The first route search server 30A transmits to the terminal 20 the map data and route guidance information of the optimal route P2G received from the second route search server 30B, and the map data and route guidance information of the route SP2 from the departure place S to the candidate connection P2 whose route was searched in the first route search server 30A. The first route search server 30A may be designed to transmit only route guidance information and link information for acquiring map data to the terminal 20 and to transmit link information to the terminal 20 when there is a map data request in the terminal 20.

In cases in which map data cannot be outputted because, for example, the output of map data is restricted by law, the second route search server 30B edits the route information and map information of the route P2G from the candidate connection P2 to the destination G as text data and transmits the text data to the first route search server 30A. This text data is more detailed than the route guidance information transmitted when roaming is possible. The first route search server 30A transmits to the terminal 20 the text data of the optimal route P2G received from the second route search server 30B, as well as the map data and route guidance information of the route SP2 from the departure place S to the candidate connection P2 whose route was searched in the first route search server 30A.

In the above description, a case was described in which the recommended route was determined by the second route search server 30B of area B, but the present invention is not limited to this case, and the second route search server 30B may simply reply to the first route search server 30A with the link costs of the routes P1G to P3G as the results of the route search, and the recommended route may be determined in the first route search server 30A. In this case, the second route search server 30B is notified of the determined recommended route, and the route guidance information, map information, and text data pertaining to the recommended route are transmitted from the second route search server 30B to the first route search server 30A.

When, based on the point information of the destination G received from the first route search server 30A, the second route search server 30B extracts a candidate connection PX different from the candidate connections P1 to P3 extracted by the first route search server 30A, the second route search server 30B preferably sends point information of the candidate connection PX to the first route search server 30A, requests that an additional search be made for the optimum candidate route from the departure place S to the candidate connection PX, extracts the link cost (required time) of this candidate route from the first route search server 30A, and adds this new candidate route to the other candidate route to determine an ultimate recommended route when the recommended route is determined in the first route search server 30A.

Although the candidate connections shown in FIG. 2 are shown herein as specified points, area A and area B are adjacent on land, the candidate connections joining area A and area B together are points of the area border if the movement means is an automobile or a railroad, and can be specified as the point information on the candidate connection as shown by P1 to P3 in FIG. 2, but this is not always the case.

For example, in cases in which the movement means between areas is a route that uses an aircraft or a route that uses a boat, two candidate points will be the node in area A and the node in area B that are the nodes at the ends of the link that joins the areas together and designates an aircraft or boat as the movement means. In cases in which the departure place S is in area A and the destination G is in area B as in FIG. 2, the point information of the candidate connection sent from the first route search server 30A in area A to the second route search server 30B in area B is an airport or harbor which is the destination node of an aircraft link or boat link, and the point information of the candidate connection of the first route search server 30A of area A is an airport or harbor which is the departure place node of an aircraft link or boat link. In this case, the total cost of the recommended route of course includes the required time of the aircraft or boat link.

In the first route search server 30A, in order to specify the destination G positioned within the range of area B provided with service by the second route search server 30B, position information on the destination G must be specified in the first route search server 30A. In this case, the configuration is preferably designed so that the first route search server 30A does not need to have the map data of area B, and POI retrieval is conducted of the names of cities, prominent establishments, and the like within the range of area B to acquire the position information thereof. POI information can be acquired from the POI information distribution server 50 (see FIG. 1) and stored in the POI information database 34A.

Information on airports, harbors, and the like, which are primary establishments, is included as POI information of areas outside of area A or outside of the country in the POI information database 34A of the first route search server 30A, and the first route search server 30A can therefore extract airports and harbors in the vicinity of the designated destination G as candidate connections.

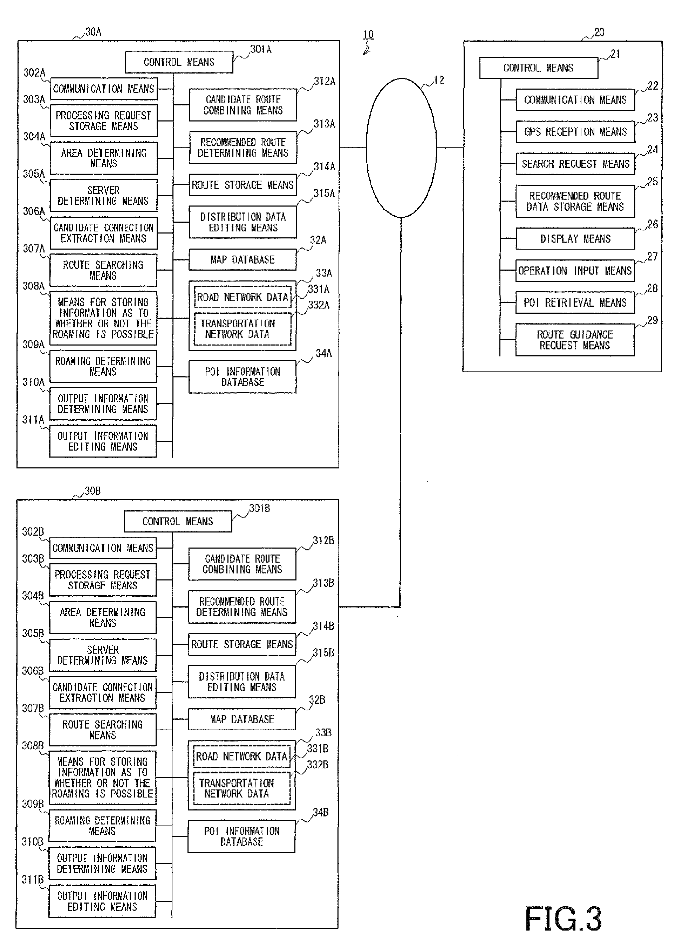

Next, the detailed configuration of a route guidance system according to the present invention will be described. FIG. 3 is a block diagram showing the detailed configuration of a route search server and a terminal.

The terminal 20 is a terminal which can receive navigation service, and is configured comprising control means 21, communication means 22, GPS reception means 23, search request means 24, recommended route data storage means 25, display means 26, operation input means 27, POI retrieval means 28, route guidance request means 29, and other components. The operation input means 27 is configured from character input keys, selection keys, cursor keys for selecting setting items and the like on a menu screen displayed on a display screen, and other components.

As previously described, the route search servers 30A, 30B comprise map databases 32A, 32B which stores map data, network databases 33A, 33B for route search which store road network data 331A, 331B and transportation network data 332A, 332B for route searches, and POI information databases 34A, 34B for storing the names and position information of POIs. In cases in which the route search servers 30A, 30B have a function for searching for a route using walking or public transportation systems and providing guidance to the terminal 20, a search for a route is performed using the road network data 331A, 331B and the transportation network data 332A, 332B.

Since the route search servers 30A, 30B have the same configuration, only the route search server 30A is described herein while a description of the route search server 30B is omitted, but it is assumed that structural elements having the same names between the route search servers 30A, 30B will have the same function. Hereinbelow, the route search server 30A, is referred to as the first route search server 30A, and the route search server 30B is referred to as the second route search server 30B.

The first route search server 30A is configured comprising control means 301A, communication means 302A, processing request storage means 303A, area determining means 304A, server determining means 305A, candidate connection extraction means 306A, route searching means 307A, means 308A for storing information as to whether or not the roaming is possible, roaming determining means 309A, output information determining means 310A, output information editing means 311A, candidate route combining means 312A, recommended route determining means 313A, route storage means 314A, distribution data editing means 315A, and other components.

When the first route search server 30A receives a route search request from the terminal 20, the search conditions and the like included in the route search request are temporarily stored in the processing request storage means 303A. Next, the area determining means 304A determines whether or not the departure place and the destination included in the route search request conditions stored in the processing request storage means 303A are a point within the service providing area of the first route search server 30A.

In cases in which the point is within the service providing area of the first route search server 30A, the route searching means 307A refers to the network database 33A for route search to perform a normal route search from the departure place to the destination in accordance with the route search conditions included in the route search request, and stores a plurality of searched candidate routes in the route storage means 314A. The recommended route determining means 313A then determines the optimal route, which is edited by the distribution data editing means 315A into distribution data for the terminal 20 and distributed to the terminal 20 by the communication means 302A.

Map data pertaining to the aforementioned optimal route is read from the map database 32A and distributed to the terminal 20. The map data may be distributed collectively when the route search is made, or the map data may be requested of the first route search server 30A when map data is needed while the terminal 20 is providing route guidance and the first route search server 30A, having received this process, may acquire the necessary map data from the map database 32A and transmit the data to the terminal 20.

In the route search request from the terminal 20, when the departure place is within the service providing area of the first route search server 30A as is the case with the departure place S of FIG. 2, for example, the destination is a point within the service providing area of the second route search server 30B as is the case with the destination G, and the terminal 20 is within the service providing area of the first route search server 30A; the route search and the optimum recommended route guidance are performed in the following manner.

First, the area determining means 304A of the first route search server 30A determines whether or not the destination G is within the service providing area of the first route search server 30A, and if it is determined to be outside of the service providing area, the server determining means 305A specifies the route search server whose service providing area is the area including the destination G. The route search server whose service providing area is the area including the destination G is the second route search server 30B in this case.

Next, the candidate connection extraction means 306A of the first route search server 30A extracts one or more candidate connections (P1 to P3 in FIG. 2, for example) that connect the area where the destination G is located from the area where the departure place S is located. When the candidate connections are extracted, the route searching means 307A searches for optimal routes connecting the departure place S and the candidate connections (P1 to P3) together and designates these routes as candidate routes (SP1 to SP3 in FIG. 2), and data and link costs (required times) of the respective candidate routes are stored in the candidate route storage means 314A.

Next, the roaming determining means 309A refers to terminal distinguishing information that was in effect when the route search request was received from the terminal 20, network information, and information as to whether or not the roaming is possible stored in the means 308A for storing information as to whether or not the roaming is possible; and determines whether or not the roaming is possible for the terminal 20 making the route search request within the service providing area of the second route search server 30B. The information as to whether or not the roaming is possible is stored corresponding to the terminal distinguishing information of the terminal and the service providing area in which roaming is possible or the route search server. The network information is information for making a contract in order to allow individual terminals 20 to communicate with the route search server, and for specifying a communication business whose manner of providing service differs with each area.

Next, the point information (position information) of the candidate connections (P1 to P3), the total link cost (required time) of the candidate routes, and the information as to whether or not the roaming is possible are transmitted to the second route search server 30B whose service providing area is the area where the destination G is located, and a request is made for a search of candidate routes from the candidate connections to the destination G.

The second route search server 30B, whose service providing area is the area where the destination G is located, stores in the processing request storage means 303B the point information of the candidate connections (P1 to P3), the total link cost (required time) of the candidate routes, and the information as to whether or not the roaming is possible received from the first route search server 30A. The route searching means 307B of the second route search server 30B then refers to the candidate connections (P1 to P3) and the point information of the destination G stored in the processing request storage means 303B and also refers to the network database 33B for route search to perform a route search from the candidate connections (P1 to P3) to the destination G.

The candidate route combining means 312B of the second route search server 30B then combines the candidate routes searched by both the first and second route search servers 30A, 30B and stores them in the route storage means 314B, the recommended route determining means 313B determines the optimal route from among these combined candidate routes to be the recommended route, and the information of the other candidate routes is deleted. The recommended route is the route whose total link cost (required time) is the lowest, for example.

When the recommended route is determined, the output information determining means 310B of the second route search server 30B refers to the information as to whether or not the roaming is possible stored in the processing request storage means 303B to determine whether or not roaming is possible. If roaming is possible, the output information editing means 311B creates link information for accessing the recommended route information stored in the route storage means 314B and transmits the link information to the first route search server 30A of the service providing area A through the communication means 302B. If roaming is impossible, the output information determining means 310B further determines whether or not the second route search server 30B can output map data outside of the service providing area.

If it is possible for the map data to be outputted, the output information editing means 311B acquires from the map database 32B the map data pertaining to the candidate routes from the candidate connections to the destination G, which constitute the recommended route, and transmits the map data to the first route search server 30A of the service providing area A through the communication means 302B. If it is not possible for the map data to be outputted, the output information editing means 311B creates route guidance information in a text data format or the like, for example, on the basis of the recommended route information and the map data, and transmits the route guidance information to the first route search server 30A of the service providing area A through the communication means 302B.

Herein is described a common method of searching for routes including movement routes that use transportation systems. Stored in the network databases 33A, 33B for route search of the route search servers 30A, 30B are the road network data 331A, 331B for searching for movement routes that use walking or automobiles, and the transportation network data 332A, 332B for searching for movement routes that use public transportation systems. These route searching means 307A, 307B refer to the network databases 33A, 33B for route search and search for a route that uses walking or automobiles or a route that uses both walking and transportation systems.

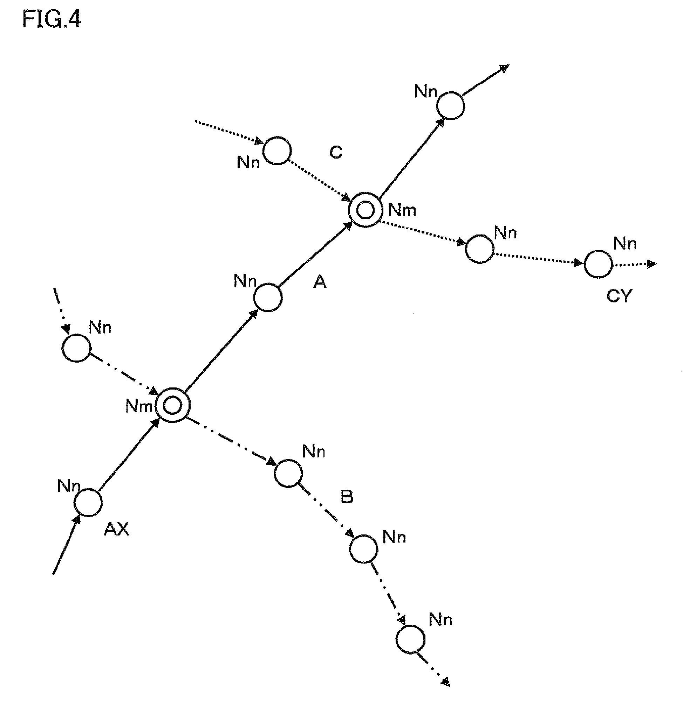

The road network data 331A, 331B is configured as follows. For example, in a case in which the road consists of roads A, B, and C as shown in FIG. 4, the end points, intersection points, turning points, and other such features of the roads A, B, and C are designated as nodes, the roads connecting the nodes together are represented as links having direction, and the road is configured from node data (latitude and longitude of nodes), link data (link numbers), and link costs data in which the data is the link cost of the links (the link distance or the required time needed in order to travel the links).

That is, in FIG. 4, the letters Nn (the symbol ○) and Nm (the symbol Ⓞ) indicate nodes, and Nm (the symbol Ⓞ) indicates an intersection point between roads. Links having direction and connecting nodes together are shown as arrow lines (solid lines, dotted lines, and double-dotted lines). Among links, there are links which indicate upward and downward sloping of roads, but for the sake of simplifying the drawing in FIG. 4, only links of arrow directions are shown.

In cases in which a route search is performed using this manner of road network data as a route search database, the links connecting from the departure place node to the destination node are traversed, their link costs are totaled, the route having the smallest total link cost is searched, and guidance is provided. Specifically, in a case in which the departure place is the node AX and the destination is the node CY in FIG. 4 and a route search is performed, road A is traveled from node AX, a right turn is made at the second intersection point onto road C, the links leading to node CY are traversed in sequence, the link costs are totaled, the route having the smallest total value of link costs is searched, and guidance is provided.

No other routes leading from node AX to node CY are shown in FIG. 4, but since other such routes actually do exist, multiple routes whereby node CY can be reached by node AX are similarly searched, and of these routes, the route having the smallest link cost is determined to be the optimal route. This method is performed by a conventional method known as the Dijkstra method, for example.

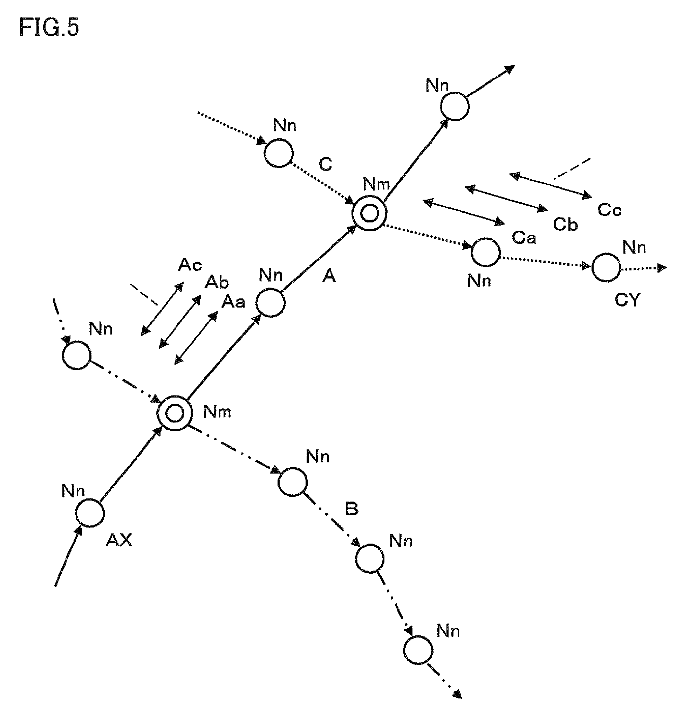

The transportation network data 332A, 332B for conducting a route search of transportation systems is configured as follows. For example, in a case of the transportation lines A, B, and C such as is shown in FIG. 5, the stations provided at the transportation lines A, B, and C (airports in lines of aircraft) are designated as nodes, the sections joining the nodes together are represented as links having direction, and node data (latitude and longitude) and link data (link numbers) are designated as network data. In FIG. 5, the letters Nn (the symbol ○) and Nm (the symbol Ⓞ) indicate nodes, where Nm (the symbol Ⓞ) indicates a connection point (a transfer station or the like) of a transportation line, and links having direction and connecting nodes together are indicated by arrow lines (solid lines, dotted lines, and double-dotted lines). Among links, there are links which indicate upward and downward sloping of roads, but for the sake of simplifying the drawing in FIG. 5, only links of arrow directions are shown.

However, the link costs of a transportation network are fundamentally different from those of a road network. That is, link costs in a road network have been fixed and static, whereas in a transportation network, there are numerous trains and aircraft traveling the transportation lines as shown in FIG. 5 (the routes of individual trains, aircraft, and the like are hereinbelow referred to as "transportation means"). There are cases in which the departure time from a node and the arrival time at the next node are established for each transportation means (defined as time schedule data and operation data) and individual routes are not necessarily linked at adjacent nodes. For example, there are cases such as express trains and local trains. In such cases, a plurality of different links exist on the same transportation line, and there are cases in which the required times between nodes differ depending on the transportation means.

In the transportation network shown in FIG. 5, there is a plurality of transportation means (routes) Aa to Ac... on the same link of the transportation line A, and a plurality of transportation means (routes) Ca to Cc... on the transportation line C. Therefore, in an operation network of a transportation system, unlike a simple road network, the quantity of data including nodes, links, and link costs is proportionate to the total number of transportation means (routes of individual aircrafts, trains, and the like). Therefore, the quantity of data of a transportation network is much greater than the quantity of data of a road network.

To search for a route from a certain departure place to a certain destination using this manner of transportation network data, all of the transportation means which can be used (ridden) to reach the destination from the departure place must be searched and a transportation means that conforms to the search conditions must be specified.

For example, in FIG. 5, in a case in which a route search is performed wherein a specified departure time is designated with the node AX of the transportation line A as the departure place and the node CY of the transportation line C as the destination, all of the transportation means that depart at or after the departure time from among the transportation means Aa to Ac... operating on the transportation line A are selected in sequence as routes at the time of departure. Based on the arrival time at the connection node on the transportation line C, a search is conducted of a combination of all the transportation means from the arrival time onward which can be boarded at the connection node from among the transportation means Ca to Cc... operating on the transportation line C, the required times, number of boardings, and other parameters of the routes are totaled, and guidance is provided.

Using this manner of network data, the route search servers 30A, 30B search a plurality of candidate routes from the departure place to the destination in accordance with the route search conditions and designate the results as candidate routes. If the departure time from the departure place is specified in the route search conditions, the arrival time at the destination is included in the guidance route data, or if the arrival time at the destination is specified, and the departure time from the departure place for arriving at the destination at the specified time is included.

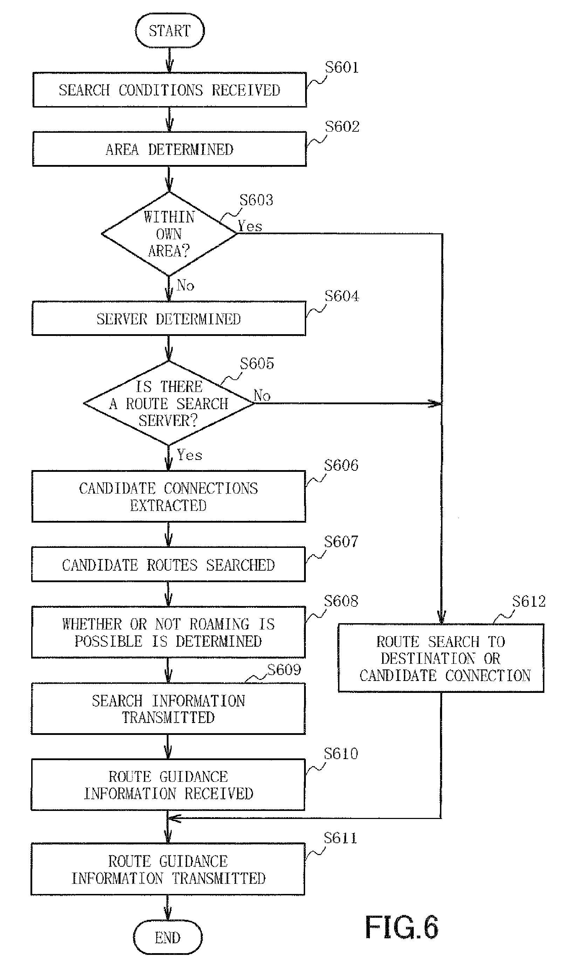

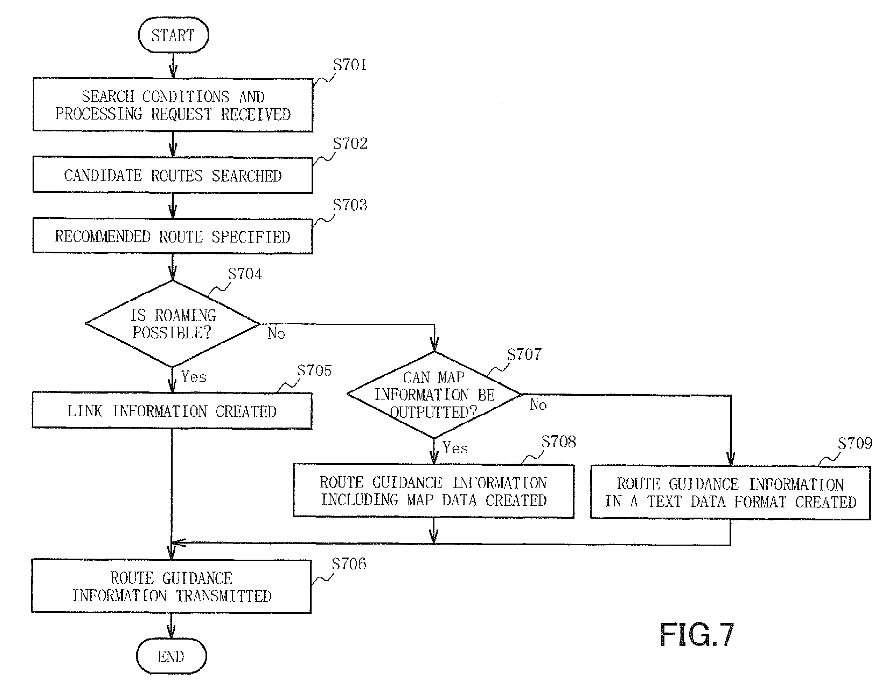

Next, the operation sequence of the route guidance system according to the example of the present invention will be described in detail with reference to the flowcharts shown in FIGS. 6 and 7. FIG. 6 is a flowchart showing the operation sequence of the first route search server 30A whose service providing area is area A shown in FIG. 2, and FIG. 7 is a flowchart showing the operation sequence of the second route search server 30B whose service providing area is the other area B shown in FIG. 2.

When the terminal 20 is located in area A and the user operates the operation input means 27, specifies the route search conditions of the departure place, destination, and the like, and makes a route search request, the route guidance request means 29 of the terminal 20 transmits a route guidance request along with the route search request and the terminal distinguishing information to the first route search server 30A. In step S601 in FIG. 6, the first route search server 30A receives the route guidance request from the terminal 20. The contents of the received processing request, the route search conditions (i.e. the departure place and the destination), and the terminal distinguishing information are temporarily stored in the processing request storage means 303A.

Next, the area determining means 304A refers to the route search conditions stored in the processing request storage means 303A, and determines whether or not the destination G is located in area A (steps S602 and S603). If the destination is determined to be located in area A, the sequence advances to the process of step S612, the route searching means 307A refers to the network database 33A for route search to perform a route search so as to satisfy the conditions stored in the processing request storage means 303A, routes that could be candidates are stored in the route storage means 314A, and the route whose total link cost (required time) is the lowest, for example, is determined by the recommended route determining means 313A.

The sequence then advances to step S611, route guidance information of a suitable format is created by the distribution data editing means 315A from the optimal route data and/or the map data acquired from the map database 32A, and the information is transmitted to the terminal 20 by the communication means 302A.

If it is determined in steps S602 and S603 that the destination G is not located within area A, the sequence advances to the process of step S604, and the server determining means 305A determines which route search server has the area including the destination G as its service providing area. If it is determined in step S605 that no route search server has the area including the destination G as its service providing area, the sequence advances to step S612.

At this time, in step S612, the route searching means 307A refers to the network database 33A for route search to extract a candidate connection for moving from area A to the other area, a route search from the departure place S to the candidate connection is performed, the searched route is stored in the route storage means 314A, and the route having the lowest total link cost (required time), for example, is determined by the recommended route determining means 313A. The sequence then advances to step S611, map data is acquired by the distribution data editing means 315A from the map database 32A on the basis of the recommended route, and route guidance information of a suitable format is created and transmitted by the communication means 302A to the terminal 20.

If it is determined in step S605 that there is a route search server whose service providing area is the area including the destination G, this route search server is specified. A case is described herein in which the area including the destination G is the service providing area of the second route search server 30B.

Next, in step S606, the candidate connection extraction means 306A of the first route search server 30A extracts one or more candidate connections (P1 to P3 in FIG. 2, for example) that join the area where the destination G is located from the area where the departure place S is located. When the candidate connections are extracted, in step S607, the route searching means 307A refers to the network database 33A for route search to search for the optimal routes connecting the departure place S with each of the candidate connections (P1 to P3) and designates these routes as candidate routes (SP1 to SP3 in FIG. 2), and data of each of the candidate routes and their total link costs (required times) are stored in the route storage means 314A.

In the next step S608, the roaming determining means 309A refers to the terminal distinguishing information stored in the processing request storage means 303A, the network information in effect when the route search request was received from the terminal 20, and the information as to whether or not the roaming is possible stored in the means 308A for storing information as to whether or not the roaming is possible, and performs a determination on whether or not the terminal 20 that made the route search request is capable of roaming within the service providing area of the second route search server 30B.

Next, in step S609, the data and link costs (required times) of the candidate routes (SP1 to SP3) from the departure place S stored in the route storage means 314A to the candidate connections (P1 to P3), the point information of the destination G, and the information as to whether or not the roaming is possible determined in step S608 are transmitted via the communication means 302A to the second route search server 30B, and a request is made for a route search in the service providing area of the second route search server 30B.

In the second route search server 30B, a search is made for candidate routes from the candidate connections (P1 to P3) to the destination G, the candidate routes are combined, the optimal route is specified as the recommended route, guidance route data is created in a format that can be outputted in the service providing area of the second route search server 30B, and this guidance route data is transmitted to the first route search server 30A. The process in the second route search server 30B is described in detail hereinafter.

In step S610, when the first route search server 30A receives recommended route data from the second route search server 30B, the received data is temporarily stored in the route storage means 314A or other storage means. While there are cases in which this received data consists only of link information for accessing the route guidance information from the second route search server 30B, there are also cases in which it consists of guidance route data including map data. In step S611, the distribution data editing means 315A edits guidance route information in a data format that can be outputted to the terminal 20, the guidance route data is transmitted to the terminal 20, and the process is ended.

Next, the sequence in the second route search server 30B will be described with reference to FIG. 7. This process is performed primarily between step S609 and S610.

When the second route search server 30B receives the data and link costs (required times) of the candidate routes from the departure place S to the candidate connections (P1 to P3), the point information of the destination G, and the route search processing request including the information as to whether or not the roaming is possible and other search conditions from the first route search server 30A in step S701, this information is temporarily stored in the processing request storage means 303B. Next, in step S702, the route searching means 307B refers to the candidate connections (P1 to P3) stored in the processing request storage means 303B, the point information of the destination G, and the network database 33B for route search to perform a route search from the candidate connections (P1 to P3) to the destination G, and data of the candidate routes is stored in the route storage means 314B.

Next, in step S703, the candidate route combining means 312B combines the data of the candidate routes from the candidate connections (P1 to P3) to the destination G stored in the route storage means 314B and the data of the candidate routes from the departure place S to the candidate connections (P1 to P3) stored in the processing request storage means 303B, and the recommended route determining means 313B specifies the route having the smallest link cost (the route having the smallest required time) as the recommended route. The data of candidate routes other than the recommended route is deleted.

Next, in step S704, the roaming determining means 309B refers to the information as to whether or not the roaming is possible stored in the processing request storage means 303B and determines whether or not the terminal 20 is capable of roaming in the service providing area of the second route search server 30B. In the case that the roaming is possible, the sequence advances to the process of step S705, the output information editing means 311B creates link information for accessing the data of the candidate route from the candidate connection to the destination G constituting the recommended route stored in the route storage means 314B, the sequence advances to the process of S706, the created link information is transmitted to the first route search server 30A, and the process is ended.

If it is determined in step S704 that the terminal 20 is not capable of roaming within the service providing area of the second route search server 30B, the sequence advances to the process of step S707, and the output information determining means 310B determines whether or not the second route search server 30B can output map data outside of its service providing area. If it is determined that the map data can be outputted, the sequence advances to the process of step S708, the output information editing means 311B acquires from the map database 32B the map data pertaining to the route from the candidate connection to the destination G constituting the recommended route, and this map data is transmitted along with the recommended route data to the first route search server 30A by the communication means 302B (step 5706).

If it is determined in step S707 that the second route search server 30B is not capable of outputting map data outside of its service providing area, the sequence advances to the process of step S709, the output information editing means 311B creates route guidance information in a text data format, for example, on the basis of the route information and the map data of the route constituting the recommended route, and this information is transmitted to the first route search server 30A by the communication means 302B (step S706).

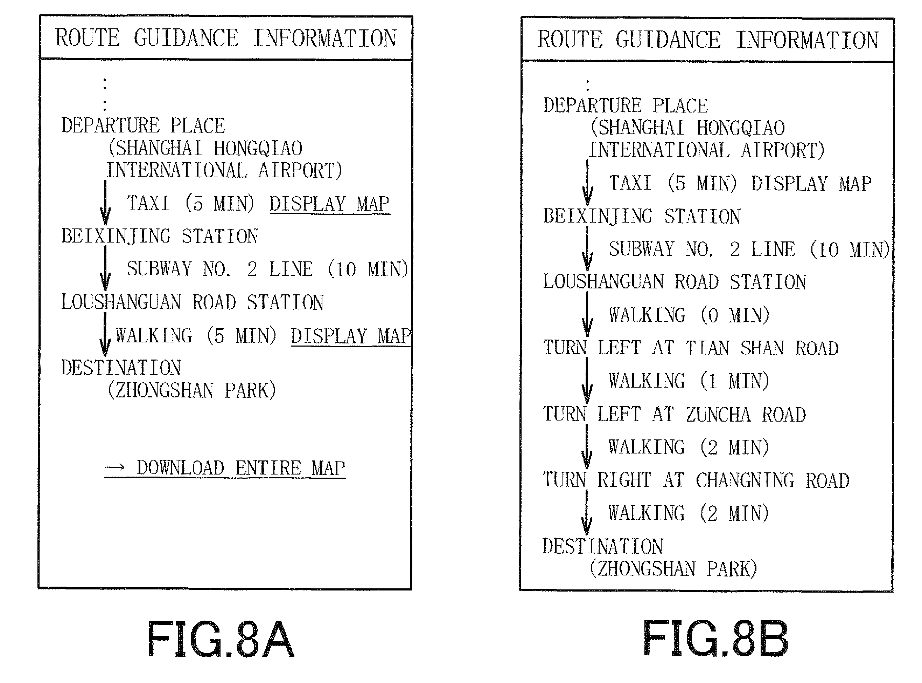

FIG. 8 includes diagrams showing the results of a route search, which are screens of route search results that the terminal 20 receives from the first route search server 30A. Particularly, FIG. 8A shows the route search results displayed on the display screen of the terminal 20 when it has been determined in step S704 of FIG. 7 that the terminal 20 is not capable of roaming within the service providing area of the second route search server 30B, it has then been determined in step S707 of FIG. 7 that the second route search server 30B is capable of outputting map information to the first route search server 30A, the route information and map data of the recommended route acquired by the output information editing means 311B in the second route search server 30B has been transmitted to the first route search server 30A, and the first route search server 30A has edited this information and data and transmitted it to the terminal 20.

Referring to FIG. 8A, the left column of the screen displays route information of a route (a transit point) from a departure place (Shanghai Hongqiao International Airport) to a destination (Zhongshan Park), which are equivalent to connections in the service providing area of the first route search server 30A and the service providing area of the second route search server 30B. The right column displays the link "display map," and the lowest part of the screen displays the link "download entire map." When the user selects the link "display map," the terminal 20 connects to the first route search server 30A and requests to acquire a map of the route portion in question. The first route search server 30A transmits the map data of the route portion stored in the route storage means 314A to the terminal 20 via the communication means 302A, and the map data is stored in the recommended route data storage means 25 of the terminal 20 and displayed on the display means 26.

When the user selects the link "download entire map," the terminal 20 connects to the first route search server 30A and requests to acquire a map covering the entire guidance route. The first route search server 30A transmits the map data of the entire guidance route stored in the route storage means 314A to the terminal 20 via the communication means 302A, and the map data is stored in the recommended route data storage means 25 of the terminal 20 and displayed on the display means 26. The departure place of FIG. 8A corresponds to the candidate connection in the previous description.

FIG. 8B shows the route search results displayed on the display screen of the terminal 20 when it has been determined in step S704 of FIG. 7 that the terminal 20 is not capable of roaming within the service providing area of the second route search server 30B, it has then been determined in step S707 of FIG. 7 that the second route search server 30B is not capable of outputting map information to the first route search server 30A, the route guidance information in text or another format created by the output information editing means 311B of the second route search server 30B on the basis of the route information and map data constituting the recommended route has been transmitted to the first route search server 30A, and the first route search server 30A has edited this information and transmitted it to the terminal 20.

Referring to FIG. 8B, displayed in text data format is route information of a route from a departure place (Shanghai Hongqiao International Airport) to a destination (Zhongshan Park) via transit points or transfer stations, which are equivalent to connections in the service providing area of the first route search server 30A and the service providing area of the second route search server 30B. Specifically, the route from the departure place (Shanghai Hongqiao International Airport) to the destination (Zhongshan Park), which is created by referring to the network database 33B for route search and the map database 32B of the second route search server 30B, is displayed as text such as "turn left at Tianshan Road." Landmarks of note are also displayed within this text. The term "landmarks" refers to road names or other specific names, "wide streets," "white buildings" and other abstract buildings, and the like.

The display screen of FIG. 8B differs from FIG. 8A in that it does not contain the links "display map" and "download entire map." Thus, if the user has moved into the service providing area of the second route search server 30B, the necessary route guidance information such as that shown in FIG. 8B can still be obtained and route guidance to the destination can still be received even if the roaming is not possible and the map data cannot be acquired.

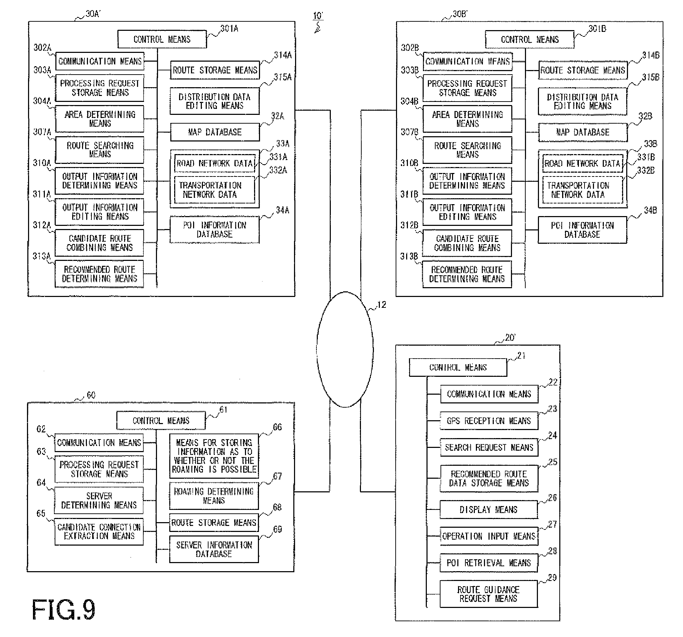

Next, the route guidance information according to Examples 2 and 3 of the present invention will be described with reference to FIG. 9.

### [Example 2]

A route guidance system 10' according to Example 2 comprises a terminal 20', a first route search server 30A' whose service providing area is area A, a second route search server 30B' whose service providing area is area B, and a route search intermediate server 60, which are connected to each other by a network 12. In FIG. 9, only first and second route search servers are shown as route search servers, but a plurality of route search servers are actually connected via the network 12.

The route guidance system 10' of Example 2 differs from Example 1 in comprising the route search intermediate server 60. The first route search server 30A' and the second route search server 30B' of Example 2 have the same configuration as those of Example 1 except that they do not have server determining means, candidate connection extraction means, means for storing information as to whether or not the roaming is possible, or roaming determining means. Therefore, structural elements that are the same in both Example 1 and Example 2 are hereinbelow denoted by the same reference symbols, and descriptions of their operations are omitted.

The route search intermediate server 60 is configured comprising control means 61, communication means 62, processing request storage means 63, server determining means 64, candidate connection extraction means 65, means 66 for storing information as to whether or not the roaming is possible, roaming determining means 67, route storage means 68, and a server information database 69.

When the terminal 20' transmits route search conditions including the departure place and destination and terminal distinguishing information of the terminal 20' to the first route search server 30A' and performs a route search request, this information is stored in the processing request storage means 303A of the first route search server 30A'. The area determining means 304A of the first route search server 30A' determines whether or not the departure place and destination included in the route search conditions stored in the processing request storage means 303A are points within the service providing area of the first route search server 30A'. As a result, if the departure place is within the service providing area of the first route search server 30A' while the destination is outside of the service providing area of the first route search server 30A', the route search and the guidance of the optimum recommended route are performed as follows.

The first route search server 30A' transmits route search conditions including the departure place and destination received from the terminal 20' as well as terminal distinguishing information of the terminal 20' to the route search intermediate server 60 and requests a route search. The route search intermediate server 60 stores the route search request and the terminal distinguishing information received from the first route search server 30A' in the processing request storage means 63. Next, based on the destination included in the route search conditions stored in the processing request storage means 63, the server determining means 64 refers to the server information database 69 and determines which route search server has the area including the destination as its service providing area. The server information database 69 stores information indicating what server has what area as its service providing area.

In the following description, the destination included in the route search conditions belongs to the service providing area of the second route search server 30B'. From the point information of the destination, the server determining means 64 determines the second route search server 30B' to be the route search server whose service providing area includes the destination.

Next, the candidate connection extraction means 65 of the route search intermediate server 60 extracts one or more candidate connections that connect the area where the departure place is located with the area where the destination is located. The information of the extracted candidate connections is transmitted to the first route search server 30A'. The route searching means 307A of the first route search server 30A performs a route search from the departure place to the candidate connections and transmits the total link costs (required times) of the candidate routes to the route search intermediate server 60.

The roaming determining means 67 then refers to the terminal distinguishing information that was received from the terminal 20' via the first route search server 30A', the network information, and the information as to whether or not the roaming is possible stored in the means 66 for storing information as to whether or not the roaming is possible, and determines whether or not the terminal 20' that made the route search request is capable of roaming within the service providing area of the second route search server 30B'.

Next, point information of the candidate connections, the information as to whether or not the roaming is possible determined by the roaming determining means 67, and the total link costs (required times) of the candidate routes from the departure place to the candidate connections are transmitted to the second route search server 30B', whose service providing area is the area where the destination is located, and a route search is requested of the second route search server 30B'.

The second route search server 30B', whose service providing area is the area where the destination is located, stores the point information of the candidate connections and the total link costs (required times) of the candidate routes received from the route search intermediate server 60, as well as the information as to whether or not the roaming is possible, in the processing request storage means 303B. Next, similar to the case of Example 1, the route searching means 307B performs a route search from the candidate routes to the destination, determines the recommended route, and stores the recommended route in the route storage means 314B.

The output information determining means 310B of the second route search server 30B' refers to the information as to whether or not the roaming is possible stored in the processing request storage means 303B and determines whether or not the roaming is possible. If the roaming is possible, the output information editing means 311B creates link information for accessing the information of the recommended route stored in the route storage means 314B, and transmits this information to the first route search server 30A' through the communication means 302B. If the roaming is not possible, the output information determining means 310B then determines whether or not the second route search server 30B' is capable of outputting map data outside of its service providing area.

If the map data can be outputted, the output information editing means 311B acquires from the map database 32B map data pertaining to the candidate route from the candidate connection to the destination that constitutes the recommended route, and transmits the map data to the first route search server 30A' through the communication means 302B. If the map data cannot be outputted, the output information editing means 311B creates route guidance information in text format or the like, for example, on the basis of the recommended route information and the map data, and transmits this information to the first route search server 30A' through the communication means 302B. An example was described herein in which the second route search server 30B' transmits route guidance information and link information for accessing the recommended route information to the first route search server 30A', but the present invention is not limited to this example, and the information may be transmitted to the first route search server 30A' via the route search intermediate server 60.

When the first route search server 30A' receives the link information and route guidance information from the second route search server 30B', it transmits the information along with the route guidance information searched in the first route search server 30A' to the terminal 20'.

### [Example 3]

The configuration of the route guidance system 10' according to Example 3 is the same as that of Example 2, but the action of the route search intermediate server 60 differs from that of Example 2 as is described hereinbelow.

In the first route search server 30A', when the route search conditions including the departure place and destination and the terminal distinguishing information of the terminal 20' are received from the terminal 20', the area determining means 304A determines whether or not the departure place and destination included in the route search conditions stored in the processing request means 303A are points within the service providing area of the first route search server 30A'. As a result, if the departure place is within the service providing area of the first route search server 30A' while the destination is outside of the service providing area of the first route search server 30A', the process is performed in the following manner.

The first route search server 30A' transmits the route search conditions including the departure place and destination received from the terminal 20' and the terminal distinguishing information of the terminal 20' to the route search intermediate server 60 and requests a server determination.

The route search intermediate server 60 stores the route search conditions and terminal distinguishing information received from the first route search server 30A' in the processing request storage means 63. Next, based on the destination included in the route search conditions stored in the processing request storage means 63, the server determining means 64 refers to the server information database 69 and determines which route search server has the area including the destination as its service providing area.

If the destination included in the route search conditions is located in the service providing area of the second route search server 30B', the server determining means 64 determines from the point information of the destination that the second route search server 30B' is the route search server whose service providing area includes the destination.

Next, the candidate connection extraction means 65 of the route search intermediate server 60 extracts one or more candidate connections joining the area where the departure place is located with the area where the destination is located. The roaming determining means 67 then refers to the terminal distinguishing information received from the terminal 20' via the first route search server 30A', the network information, and the information as to whether or not the roaming is possible stored in the means 66 for storing information as to whether or not the roaming is possible, and determines whether or not the terminal 20' that made the route search request is capable of roaming within the service providing area of the second route search server 30B'.

The route search intermediate server 60 then transmits to the first route search server 30A' the information of the route search server (the second route search server 30B' in this case) whose service providing area was determined by the server determining means 64 to be the area including the destination, the point information of the candidate connections, and the information as to whether or not the roaming is possible determined by the roaming determining means 67.

Based on the point information of the candidate connections received from the route search intermediate server 60, the route searching means 307A of the first route search server 30A' performs a route search from the departure place to the candidate connections and temporarily stores the candidate routes in the route storage means 314A. Next, the point information of the candidate connections, the total link costs (required times) of the candidate routes, and the information as to whether or not the roaming is possible are transmitted and a route search request is made to the route search server (the second route search server 30B' in this case) whose service providing area is the area including the destination, received from the route search intermediate server 60.

The second route search server 30B' stores in the processing request storage means 303B the point information of the candidate connections, the total link costs (required times) of the candidate routes, and the information as to whether or not the roaming is possible received from the first route search server 30A', and the route searching means 307B performs a route search from the candidate routes to the destination, determines a recommended route, and stores the recommended route in the route storage means 314B, similar to the case of Example 1.

The output information determining means 310B of the second route search server 30B' refers to the information as to whether or not the roaming is possible stored in the processing request storage means 303B and determines whether or not the roaming is possible. If the roaming is possible, the output information editing means 311B creates link information for accessing the recommended route information stored in the route storage means 314B, and transmits the link information to the first route search server 30A' through the communication means 302B. If the roaming is not possible, the output information determining means 310B then determines whether or not the second route search server 30B' is capable of outputting map data outside of its service providing area.

If the map data can be outputted, the output information editing means 311B acquires from the map database 32B map data pertaining to the candidate route from the candidate connection to the destination that constitutes the recommended route, and transmits the map data to the first route search server 30A' through the communication means 302B. If the map data cannot be outputted, the output information editing means 311B creates route guidance information in the format of text data or the like, for example, on the basis of the recommended route information and the map data, and transmits this information to the first route search server 30A' through the communication means 302B.

When the first route search server 30A' receives the link information and route guidance information from the second route search server 30B', it transmits the information along with the route guidance information searched in the first route search server 30A' to the terminal 20'.

In the above description, a case was described in which the candidate connections were extracted by the route search intermediate server, but the present invention is not limited to this case, and the route search intermediate server may specify the route search server whose service providing area is the area including the destination and also determine whether or not roaming is possible for this route search server, while the candidate connections are extracted by the first route search server.

According to Examples 2 and 3 above, even in cases in which the first route search server does not have a function for specifying the route search server whose service providing area is the area including the destination, the route search intermediate server can be requested to determine the server, and it is therefore possible to connect route search servers and provide route guidance even when a destination outside of the service providing area has been indicated.

## Claims

1. A route guidance system comprising a first route search server having a first area as a service providing area, a second route search server having a second area as a service providing area, and a terminal connected via a network at least to the first route search server in said first area; the route guidance system **characterized in that**:
said first route search server has server determining means for determining the route search server having as a service providing area the area including a point indicated by point information serving as a route search condition received from said terminal, and roaming determining means for determining whether or not said terminal is capable of roaming in the service providing area of said determined route search server;
said second route search server has route searching means for searching for an optimal route that satisfies said route search condition, output information determining means for determining information that can be outputted to said first route search server, and output information editing means for editing information of said searched route on the basis of said outputtable information; and
when said terminal sends a route search request including the point information serving as a route search condition to said first route search server:
in the case that the area including the point indicated by said point information is said second area, said first route search server determines, using said server determining means, that the route search server having the second area as the service providing area is the second route search server, determines, using said roaming determining means, whether or not the terminal is capable of roaming in said second area, transmits the point information serving as said route search condition and information as to whether or not the roaming is possible to said second route search server, and requests a route search;
in the case that said second route search server searches, using said route searching means, for an optimal route satisfying said route search condition, and said information as to whether or not the roaming is possible indicates that the roaming is not possible, information that can be outputted to said first route search server is determined by said output information determining means, information of said optimal route is edited based on said outputtable information by said output information editing means, and guidance route information is created and provided to said first route search server; and
said first route search server transmits said created guidance route information to said terminal.

2. The route guidance system according to claim 1, **characterized in that** said route search condition includes a departure place in the first area as point information, said first route search server has route searching means and candidate connection extraction means for extracting point information of at least one candidate connection whereby said second area can be reached from said first area, and said first route search server searches, using said route searching means, for an optimal route from said departure place to said candidate connection and transmits the optimal route along with optimal route information received from said second route search server to said terminal.

3. The route guidance system according to claim 1 or 2, **characterized in that** when said information as to whether or not the roaming is possible indicates that the roaming is not possible, said output information determining means determines whether or not map data of the unroamable area can be outputted; and said output information editing means creates guidance route information so as to include the map data when the map data can be outputted, and creates guidance route information configured from textual information when the map data cannot be outputted.

4. The route guidance system according to any of claims 1 through 3, **characterized in that** said roaming determining means determines whether or not the roaming is possible on the basis of terminal distinguishing information of said terminal and/or the network information at the time the route search condition was received from said terminal.

5. The route guidance system according to claim 4, **characterized in that** said first route search server has means for storing information as to whether or not the roaming is possible, the means storing information as to whether or not the roaming is possible in correspondence with each set of terminal distinguishing information, and said roaming determining means, on the basis of the terminal distinguishing information of said terminal, refers to said means for storing information as to whether or not the roaming is possible and determines whether or not the roaming is possible.

6. A route guidance system comprising a first route search server having a first area as a service providing area, a second route search server having a second area as a service providing area, a terminal connected via a network at least to the first route search server in said first area; and a route search intermediate server connected to a plurality of route search servers; the route guidance system **characterized in that**:
said first route search server has area determining means for determining whether or not an area including a point indicated by point information serving as a route search condition received from said terminal is a service providing area;
said route search intermediate server has server determining means for determining the route search server having as a service providing area the area including the point indicated by the point information serving as a route search condition received from said first route search server when said first route search server has received point information determined not to be in the service providing area; and roaming determining means for determining whether or not said terminal is capable of roaming in the service providing area of said determined route search server;
said second route search server has route searching means for searching for an optimal route that satisfies said route search condition, output information determining means for determining information that can be outputted to said first route search server, and output information editing means for editing information of said searched route on the basis of said outputtable information; and
when said terminal sends a route search request including the point information serving as a route search condition to said first route search server:
said first route search server transmits a route search request including the point information serving as said route search condition to said route search intermediate server in the case that the point indicated by said point information is determined by said area determining means to not be included in the service providing area of the first route search server;
in the case that the area including the point indicated by said point information is said second area, said route search intermediate server determines, using said server determining means, that the route search server having the second area as the service providing area is the second route search server, determines, using said roaming determining means, whether or not said terminal is capable of roaming in said second area, transmits the point information serving as said route search condition and information as to whether or not the roaming is possible to said second route search server, and requests a route search;
in the case that said second route search server searches, using said route searching means, for an optimal route satisfying said route search condition and said information as to whether or not the roaming is possible indicates that the roaming is not possible, information that can be outputted to said first route search server is determined by said output information determining means, information of said optimal route is edited by said output information editing means based on said outputtable information, and guidance route information is created and provided to said first route search server via said route search intermediate server; and
said first route search server transmits said created guidance route information to said terminal.

7. A route guidance system comprising a first route search server having a first area as a service providing area, a second route search server having a second area as a service providing area, a terminal connected via a network at least to the first route search server in said first area, and a route search intermediate server connected to a plurality of route search servers; the route guidance system **characterized in that**:
said first route search server has area determining means for determining whether or not an area including a point indicated by point information serving as a route search condition received from said terminal is a service providing area;
said route search intermediate server has server determining means for determining the route search server having as a service providing area the area including the point indicated by the point information serving as a route search condition received from said first route search server when said first route search server has received point information determined not to be in the service providing area, and roaming determining means for determining whether or not said terminal is capable of roaming in the service providing area of said determined route search server;
said second route search server has route searching means for searching for an optimal route that satisfies said route search condition, output information determining means for determining information that can be outputted to said first route search server, and output information editing means for editing information of said searched route on the basis of said outputtable information; and
when said terminal sends a route search request including the point information serving as a route search condition to said first route search server:
said first route search server transmits the point information serving as said route search condition to said route search intermediate server in the case that the point indicated by said point information is determined by said area determining means to not be included in the service providing area of the first route search server;
in the case that the area including the point indicated by said point information is said second area, said route search intermediate server determines, using said server determining means, that the route search server having the second area as the service providing area is the second route search server, determines, using said roaming determining means, whether or not said terminal is capable of roaming in said second area, and transmits said determined second route search server information and information as to whether or not the roaming is possible to said first route search server;
said first route search server transmits the point information serving as said route search conditions and said information as to whether or not the roaming is possible to said second route search server and requests a route search;
in the case that said second route search server searches, using said route searching means, for an optimal route satisfying said route search condition and said information as to whether or not the roaming is possible indicates that the roaming is not possible, information that can be outputted to said first route search server is determined by said output information determining means, information of said optimal route is edited by said output information editing means based on said outputtable information, and guidance route information is created and provided to said first route search server; and
said first route search server transmits said created guidance route information to said terminal.

8. The route guidance system according to claim 6 or 7 **characterized in that** said route search condition includes a departure place in the first area as point information, said first route search server has route searching means, and said route search intermediate server has candidate connection extraction means for extracting point information of at least one candidate connection whereby said second area can be reached from said first area;
when said route search intermediate server receives a route search request including the departure place in said first area as point information from said first route search server, point information of at least one candidate connection whereby said second area can be reached by said first area is extracted by said candidate connection extraction means and transmitted to said first route search server; and
said first route search server searches for an optimal route from said departure place to said candidate connection using said route searching means and transmits the optimal route along with optimal route information received from said second route search server to said terminal.

9. The route guidance system according to any of claims 6 through 8, **characterized in that** when said information as to whether or not the roaming is possible indicates that the roaming is not possible, said output information determining means determines whether or not map data of the unroamable area can be outputted, and said output information editing means creates guidance route information so as to include the map data when the map data can be outputted and creates guidance route information configured from textual information when the map data cannot be outputted.

10. The route guidance system according to any of claims 6 through 9, **characterized in that** said roaming determining means determines whether or not the roaming is possible on the basis of terminal distinguishing information of said terminal and/or the network information at the time the route search condition was received from said terminal via said first route search server.

11. The route guidance system according to claim 10, **characterized in that** said route search intermediate server has means for storing information as to whether or not the roaming is possible, the means storing information as to whether or not the roaming is possible in correspondence with each set of terminal distinguishing information, said first route search server transmits the terminal distinguishing information along with the route search condition to said route search intermediate server, and said roaming determining means refers to said means for storing information as to whether or not the roaming is possible on the basis of the terminal distinguishing information of said terminal received from said first route search server and determines whether or not the roaming is possible.

12. A route search server constituting a first route search server in a route guidance system, the route guidance system having said first route search server having a first area as a service providing area, a second route search server having a second area as a service providing area, and a terminal connected via a network at least to the first route search server in said first area; the route search server **characterized in** comprising:
server determining means for determining the route search server having as a service providing area the area including a point indicated by point information serving as a route search condition received from said terminal, and roaming determining means for determining whether or not said terminal is capable of roaming in the service providing area of said determined route search server; wherein
when a route search request including point information serving as a route search condition is received from said terminal, in the case that the area including the point indicated by said point information is said second area, the route search server having the second area as a service providing area is determined by said server determining means to be said second route search server, whether or not said terminal is capable of roaming in said second area is determined by said roaming determining means, the point information serving as said route search condition and information as to whether or not the roaming is possible are transmitted to said second route search server, a route search is requested, and when guidance route information is received from said second route search server, said guidance route information is transmitted to said terminal.

13. A route search server constituting a second route search server in a route guidance system having a first route search server having a first area as a service providing area, said second route search server having a second area as a service providing area, and a terminal connected via a network at least to the first route search server in said first area; the route search server **characterized in** comprising:
route searching means for searching for an optimal route that satisfies a route search condition, output information determining means for determining information that can be outputted to said first route search server, and output information editing means for editing information of said searched route on the basis of said outputtable information; wherein
when a route search request including point information serving as a route search condition and information as to whether or not the roaming is possible is received from said first route search server, an optimal route that satisfies said route search condition is searched by said route searching means, and in the case that said information as to whether or not the roaming is possible indicates that the roaming is not possible, information that can be outputted to said first route search server is determined by said output information determining means, said optimal route information is edited by said output information editing means on the basis of said outputtable information, and guidance route information is created and supplied to said first route search server.

14. A route search server constituting a plurality of route search servers in a route guidance system having said plurality of route search servers having different areas as service providing areas, and a terminal connected via a network to at least one route search server of said plurality of route search servers; the route search server **characterized in that**:
said route search server comprises server determining means for determining the route search server having as a service providing area the area including a point indicated by point information serving as a route search condition received from said terminal, roaming determining means for determining whether or not said terminal is capable of roaming in the service providing area of said determined route search server, route searching means for searching for an optimal route that satisfies said route search condition, output information determining means for determining information that can be outputted to the different route search servers, and output information editing means for editing information of said searched route on the basis of said outputtable information;
when a route search request including point information serving as a route search condition is received from said terminal, the route search server having as a service providing area the area including the point indicated by said point information is determined by said server determining means, whether or not said terminal is capable of roaming in the area is determined by said roaming determining means, the point information serving as said route search condition and information as to whether or not the roaming is possible are transmitted to said determined route search server, a route search is requested, and in the case that guidance route information is received from the route search server that was requested to make said route search, said guidance route information is transmitted to said terminal; and
when a route search request including point information serving as a route search condition and information as to whether or not the roaming is possible are received from another route search server, an optimal route that satisfies said route search conditions is searched by said route searching means, and in the case that said information as to whether or not the roaming is possible indicates that the roaming is not possible, information that can be outputted to said other route search server is determined by said output information determining means, said optimal route information is edited by said output information editing means on the basis of said outputtable information, and guidance route information is created and supplied to said other route search server.

15. The route search server according to claim 13 or 14, **characterized in that** when said information as to whether or not the roaming is possible indicates that the roaming is not possible, said output information determining means determines whether or not map data of the unroamable area can be outputted, and said output information editing means creates guidance route information so as to include the map data when the map data can be outputted and creates guidance route information configured from textual information when the map data cannot be outputted.

16. The route search server according to claim 12 or 14, **characterized in that** said roaming determining means determines whether or not the roaming is possible on the basis of terminal distinguishing information of said terminal and/or the network information at the time the route search conditions were received from said terminal.

17. The route search server according to claim 16, **characterized in that** said route search server has means for storing information as to whether or not the roaming is possible, the means storing information as to whether or not the roaming is possible in correspondence with each set of terminal distinguishing information, and said roaming determining means refers to said means for storing information as to whether or not the roaming is possible on the basis of the terminal distinguishing information of said terminal and determines whether or not the roaming is possible.

18. A route search server constituting a first route search server in a route guidance system, the route guidance system having said first route search server having a first area as a service providing area, a second route search server having a second area as a service providing area, a terminal connected via a network at least to the first route search server in said first area, and a route search intermediate server connected to a plurality of route search servers; the route search server **characterized in** comprising:
area determining means for determining whether or not an area including a point indicated by point information serving as a route search condition received from said terminal is a service providing area; wherein
when a route search request including point information serving as a route search condition is received from said terminal, in the case that the point indicated by said point information is determined to not be included in the service providing area by said area determining means, a route search request including the point information serving as a route search condition received from said terminal is transmitted to said route search intermediate server, a route search is requested, and when guidance route information is received from said route search intermediate server, said guidance route information is transmitted to said terminal.

19. A route search server constituting a first route search server in a route guidance system, the route guidance system having said first route search server having a first area as a service providing area, a second route search server having a second area as a service providing area, a terminal connected via a network at least to the first route search server in said first area, and a route search intermediate server connected to a plurality of route search servers; the route search server **characterized in** comprising:
area determining means for determining whether or not an area including a point indicated by point information serving as a route search condition received from said terminal is a service providing area; wherein
when a route search request including point information serving as a route search condition is received from said terminal, in the case that the point indicated by said point information is determined by said area determining means to not be included in the service providing area, the point information serving as the route search condition received from said terminal is transmitted to said route search intermediate server; when information of the route search server having as a service providing area the area including the point indicated by said point information and information as to whether or not the roaming is possible are received from said route search intermediate server, the point information serving as said route search condition and said information as to whether or not the roaming is possible are transmitted to the route search server having as a service providing area the area including the point indicated by said point information, a route search is requested, and when guidance route information is received from the route search server, said guidance route information is transmitted to said terminal.

20. A route search server constituting a second route search server in a route guidance system, the route guidance system having a first route search server having a first area as a service providing area, said second route search server having a second area as a service providing area, a terminal connected via a network at least to the first route search server in said first area, and a route search intermediate server connected to a plurality of route search servers; the route search server **characterized in** comprising:
route searching means for searching for an optimal route that satisfies said route search condition, output information determining means for determining information that can be outputted to said first route search server, and output information editing means for editing information of said searched route on the basis of said outputtable information;
when a route search request including point information serving as a route search condition and information as to whether or not the roaming is possible is received from said first route search server or said route search intermediate server, an optimal route that satisfies said route search conditions is searched by said route searching means, and in the case that said information as to whether or not the roaming is possible indicates that the roaming is not possible, information that can be outputted to said first route search server is determined by said output information determining means, said optimal route information is edited by said output information editing means on the basis of said outputtable information, and guidance route information is created and supplied to said first route search server or said route search intermediate server that received said route search request.

21. A route search server constituting a plurality of route search servers in a route guidance system, the route guidance system having said plurality of route search servers having service providing areas that are different areas, a terminal connected via a network to at least one route search server of said plurality of route search servers, and a route search intermediate server connected to said plurality of route search servers; the route search server **characterized in** comprising:
area determining means for determining whether or not an area including a point indicated by point information serving as a route search condition received from said terminal is a service providing area, route searching means for searching for an optimal route that satisfies said route search condition, output information determining means for determining information that can be outputted to the different route search servers, and output information editing means for editing information of said searched route on the basis of said outputtable information; wherein
when a route search request including point information serving as a route search condition has been received from said terminal, a determination is made by said area determining means as to whether or not the area including the point indicated by the point information as the route search condition received from said terminal is the service providing area, and in the case that the point indicated by said point information is not included in the service providing area, a route search request including the point information serving as said route search condition is transmitted to said route search intermediate server and a route search is requested;
when guidance route information has been received from said route search intermediate server, said route guidance information is transmitted to said terminal; and
when a route search request including point information serving as a route search condition and information as to whether or not the roaming is possible is received from said route search intermediate server, an optimal route that satisfies said route search conditions is searched by said route searching means, and in the case that said information as to whether or not the roaming is possible indicates that the roaming is not possible, information that can be outputted to said other route search server is determined by said output information determining means, information of said optimal route is edited by said output information editing means on the basis of said outputtable information, and guidance route information is created and provided to said route search intermediate server.

22. A route search server constituting a plurality of route search servers in a route guidance system, the route guidance system having said plurality of route search servers having service providing areas that are different areas, a terminal connected via a network to at least one route search server of said plurality of route search servers, and a route search intermediate server connected to said plurality of route search servers; the route search server **characterized in** comprising:
area determining means for determining whether or not an area including a point indicated by point information serving as a route search condition received from said terminal is a service providing area, route searching means for searching for an optimal route that satisfies said route search condition, output information determining means for determining information that can be outputted to the different route search servers, and output information editing means for editing information of said searched route on the basis of said outputtable information; wherein
when a route search request including point information serving as a route search condition has been received from said terminal, a determination is made by said area determining means as to whether or not the area including the point indicated by the point information as the route search condition received from said terminal is the service providing area, and in the case that the point indicated by said point information is determined to not be included in the service providing area, the point information serving as said route search condition is transmitted to said route search intermediate server and a request is made to determine the route search server and to determine whether or not roaming is possible;
when information as to whether or not the roaming is possible and information of the route search server having as a service providing area the area including the point indicated by said point information have been received from said route search intermediate server, the point information serving as said route search condition and said information as to whether or not the roaming is possible are transmitted to the route search server having as a service providing area the area including the point indicated by said point information and a route search is requested;
when route guidance information has been received from the route search server that requested said route search, said guidance route information is transmitted to said terminal; and
when a route search request including the point information serving as the route search condition and the information as to whether or not the roaming is possible has been received from another route search server, an optimal route that satisfies said route search condition is searched by said route searching means, and in the case that said information as to whether or not the roaming is possible indicates that the roaming is not possible, information that can be outputted to said other route search server is determined by said output information determining means, information of said optimal route is edited by said output information editing means on the basis of said outputtable information, and route guidance information is created and provided to said other route search server.

23. The route search server according to any of claims 20 through 22, **characterized in that** in the case that said information as to whether or not the roaming is possible indicates that the roaming is not possible, said output information determining means determines whether or not map data of the unroamable area can be outputted, and said output information editing means creates guidance route information so as to include the map data when the map data can be outputted and creates guidance route information configured from textual information when the map data cannot be outputted.

24. A route search intermediate server in a route guidance system having a first route search server having a first area as a service providing area, a second route search server having a second area as a service providing area, a terminal connected via a network at least to the first route search server in said first area, and said route search intermediate server connected to a plurality of route search servers; the route search intermediate server **characterized in** comprising:
server determining means for determining the route search server having as a service providing area an area including a point indicated by point information serving as a route search condition received from said first route search server when said first route search server receives point information determined to not be in the service providing area, and roaming determining means for determining whether or not said terminal is capable of roaming in the service providing area of said determined route search server; wherein
when a route search request including point information serving as a route search condition is received from said first route search server, in the case that the area including the point indicated by said point information is said second area, the route search server having the second area as a service providing area is determined by said server determining means to be said second route search server, whether or not said terminal is capable of roaming in said second area is determined by said roaming determining means, the point information serving as said route search condition and information as to whether or not the roaming is possible are transmitted to said second route search server, and a route search is requested; and
when guidance route information is received from said second route search server, said guidance route information is transmitted to said first route search server.

25. A route search intermediate server in a route guidance system having a first route search server having a first area as a service providing area, a second route search server having a second area as a service providing area, a terminal connected via a network at least to the first route search server in said first area, and said route search intermediate server connected to a plurality of route search servers; the route search intermediate server **characterized in** comprising:
server determining means for determining the route search server having as a service providing area an area including a point indicated by point information serving as a route search condition received from said first route search server when said first route search server receives point information determined to not be in the service providing area, and roaming determining means for determining whether or not said terminal is capable of roaming in the service providing area of said determined route search server; wherein
when point information serving as a route search condition is received from said first route search server, in the case that the area including the point indicated by said point information is said second area, the route search server having the second area as a service providing area is determined by said server determining means to be said second route search server, whether or not said terminal is capable of roaming in said second area is determined by said roaming determining means, and said determined information of the second route search server and information as to whether or not the roaming is possible are transmitted to said first route search server.

26. The route search intermediate server according to claim 24 or 25, **characterized in that** said roaming determining means determines whether or not the roaming is possible on the basis of terminal distinguishing information of said terminal and/or the network information at the time the route search condition was received from said terminal via said first route search server.

27. The route search intermediate server according to claim 24 or 25, **characterized in that** said route search intermediate server has means for storing information as to whether or not the roaming is possible, the means storing information as to whether or not the roaming is possible in correspondence with each set of terminal distinguishing information, said first route search server transmits the terminal distinguishing information along with the route search condition to said route search intermediate server, and said roaming determining means refers, on the basis of the terminal distinguishing information of said terminal received from said first route search server, to said means for storing information as to whether or not the roaming is possible and determines whether or not the roaming is possible.

28. A route guidance method in a route guidance system having a first route search server having a first area as a service providing area, a second route search server having a second area as a service providing area, and a terminal connected via a network at least to the first route search server in said first area; the route guidance method **characterized in that**:
when said terminal sends to said first route search server a route search request including point information serving as a route search condition, in said first route search server, in the case that an area including a point indicated by said point information is said second area, the route search server whose service providing area is the second area is determined to be the second route search server, a determination is made as to whether or not said terminal is capable of roaming in said second area, the point information serving as said route search condition and information as to whether or not the roaming is possible are transmitted to said second route search server, and a route search is requested;
in said second route search server, an optimal route that satisfies said route search condition is searched, and in the case that the information as to whether or not the roaming is possible indicates that the roaming is not possible, information that can be outputted to said first route search server is determined, information of said optimal route is edited based on said outputtable information, and guidance route information is created and provided to said first route search server; and
in said first route search server, said created guidance route information is transmitted to said terminal.

29. The route guidance method according to claim 28, **characterized in that** said route search condition includes a departure place in the first area as point information, and an optimal route from said departure place to candidate connection is searched in said first route search server and transmitted to said terminal along with optimal route information received from said second route search server.

30. The route guidance method according to claim 28 or 29, **characterized in that** in the case that said information as to whether or not the roaming is possible indicates that the roaming is not possible, a determination is made as to whether or not it is possible to output map data of the unroamable area, guidance route information is created so as to include the map data when the map data can be outputted, and guidance route information configured from textual information is created when the map data cannot be outputted.

31. The route guidance method according to any of claims 28 through 30, **characterized in that** a determination of whether or not roaming is possible is made based on terminal distinguishing information of said terminal and/or network information at the time a route search condition was received from said terminal.

32. The route guidance method according to claim 31, **characterized in that** in said first route search server, information of whether or not the roaming is possible is stored in correspondence with each set of terminal distinguishing information, said stored information as to whether or not the roaming is possible is referred to based on the terminal distinguishing information of said terminal and a determination is made as to whether or not the roaming is possible.

33. A route guidance method in a route guidance system having a first route search server having a first area as a service providing area, a second route search server having a second area as a service providing area, a terminal connected via a network at least to the first route search server in said first area, and a route search intermediate server connected to a plurality of route search servers; the route guidance method **characterized in that**:
when said terminal sends to said first route search server a route search request including point information serving as a route search condition, in said first route search server, in the case that the point indicated by said point information is determined to not be included in the service providing area of said first route search server, a route search request including the point information serving as said route search condition is transmitted to said route search intermediate server;
in said route search intermediate server, in the case that the area including the point indicated by said point information is said second area, the route search server whose service providing area is the second area is determined to be the second route search server, a determination is made as to whether or not said terminal is capable of roaming in said second area, the point information serving as said route search condition and information as to whether or not the roaming is possible are transmitted to said second route search server, and a route search is requested;
in said second route search server, an optimal route that satisfies said route search condition is searched, and in the case that the information as to whether or not the roaming is possible indicates that the roaming is not possible, information that can be outputted to said first route search server is determined, information of said optimal route is edited based on said outputtable information, and guidance route information is created and provided to said first route search server via said route search intermediate server; and
in said first route search server, said created guidance route information is transmitted to said terminal.

34. A route guidance method in a route guidance system having a first route search server having a first area as a service providing area, a second route search server having a second area as a service providing area, a terminal connected via a network at least to the first route search server in said first area, and a route search intermediate server connected to a plurality of route search servers; the route guidance method **characterized in that**:
when said terminal sends to said first route search server a route search request including point information serving as a route search condition, in said first route search server, in the case that the point indicated by said point information is determined to not be included in the service providing area of said first route search server, the point information serving as said route search condition is transmitted to said route search intermediate server;
in said route search intermediate server, in the case that the area including the point indicated by said point information is said second area, the route search server whose service providing area is the second area is determined to be the second route search server, a determination is made as to whether or not said terminal is capable of roaming in said second area, and said determined information of the second route search server and information as to whether or not the roaming is possible are transmitted to said first route search server;
in said first route search server, the point information serving as said route search condition and said information as to whether or not the roaming is possible are transmitted to said second route search server and a route search is requested;
in said second route search server, an optimal route that satisfies said route search condition is searched, and in the case that said information as to whether or not the roaming is possible indicates that the roaming is not possible, information that can be outputted to said first route search server is determined, information of said optimal route is edited based on said output table information, and guidance route information is created and provided to said first route search server; and
in said first route search server, said created guidance route information is transmitted to said terminal.

35. The route guidance method according to claim 33 or 34, **characterized in that** said route search condition includes a departure place in the first area as point information, and in said route search intermediate server, and when a route search request including the departure place in said first area as point information is received from said first route search server, point information of at least one candidate connection whereby said second area can be reached by said first area is extracted and transmitted to said first route search server; and
in said first route search server, an optimal route from said departure place to said candidate connection is searched and transmitted to said terminal along with the optimal route information received from said second route search server.

36. The route guidance method according to any of claims 33 through 35, **characterized in that** in the case that said information as to whether or not the roaming is possible indicates that the roaming is not possible, a determination is made as to whether or not map data of the unroamable area can be outputted, guidance route information is created so as to include the map data when the map data can be outputted, and guidance route information configured from textual information is created when the map data cannot be outputted.

37. The route guidance method according to any of claims 33 through 36, **characterized in that** a determination of whether or not roaming is possible is made based on terminal distinguishing information of said terminal and/or network information at the time a route search condition was received from said terminal via said first route search server.

38. The route guidance method according to claim 37, **characterized in that** in said route search intermediate server, information of whether or not the roaming is possible is stored in correspondence with each set of terminal distinguishing information, in said first route search server, the terminal distinguishing information is transmitted to said route search intermediate server along with the route search condition, and in said route search intermediate server, said stored information as to whether or not the roaming is possible is referred to based on the terminal distinguishing information of said terminal and a determination is made as to whether or not the roaming is possible.
